# EUROPEAN PATENT APPLICATION

(11) **EP 4 848 046 A1**
(43) Date of publication of application: **02.12.2026**
(21) Application number: 25772755.2
(22) Date of filing: 11.02.2025
(51) Int. Cl.: G06F 3/041, G06F 3/14

(54) **DISPLAY SCREEN CONTROL METHOD AND TERMINAL DEVICE**

(30) Priority: 21.03.2024 CN 202410332642
(71) Applicant: Honor Device Co., Ltd., Shenzhen, Guangdong 518040 (CN)
(72) Inventor: JIA, Xingwang, Shenzhen, Guangdong 518040 (CN); LI, Chenlong, Shenzhen, Guangdong 518040 (CN); JI, Shuaifei, Shenzhen, Guangdong 518040 (CN); XIAO, Laicheng, Shenzhen, Guangdong 518040 (CN)
(74) Representative: Isarpatent
(86) International application number: PCT/CN2025/076854
(87) International publication number: WO 2025/195045

(57) **Abstract**

This application discloses a display control method and a terminal device, and relates to the field of terminal touch. The terminal device includes an acceleration sensor and a touch sensor disposed on a display. The method includes: The terminal device obtains, based on a touch signal acquired by the touch sensor, a touch operation performed on the display, obtains an attitude change of the terminal device based on an attitude signal acquired by the acceleration sensor, and performs a display turn-off action when the touch operation on the display meets a preset first condition and the attitude change of the terminal device meets a preset second condition. A case in which a distance between a display and an occluding object cannot be accurately recognized using an optical proximity sensor and as a result a display turn-off action is determined by mistake is avoided, thereby improving stability of display turn-off determining.

## Description

This application claims priority to Chinese Patent Application No. 202410332642.5, filed with the China National Intellectual Property Administration on March 21, 2024 and entitled "DISPLAY CONTROL METHOD AND TERMINAL DEVICE", which is incorporated herein by reference in its entirety.

### TECHNICAL FIELD

This application relates to the field of terminal touch, and in particular, to a display control method and a terminal device.

### BACKGROUND

When a user makes or answers a call using a terminal device such as a mobile phone, because a display of the mobile phone is close to parts such as the face, ear, or hair of the user, contact between these parts and the display of the mobile phone may easily cause accidental touches, resulting in a disconnection of the call, a jump to another page, or the like, affecting user experience.

Currently, a solution for accidental touches on a display of a mobile phone generally includes: detecting a distance between the display and an occluding object using an optical proximity sensor to determine whether the display is occluded; detecting an attitude change of the mobile phone using an acceleration sensor to determine whether a user performs an action of holding the mobile phone near an ear; and if it is determined, based on the two pieces of information, that it is a scenario of making or answering a call, controlling the mobile phone to turn off the display, thereby avoiding accidental touches.

However, limited by the structure of the optical proximity sensor, when an object occluding the display is close enough to the display, the mobile phone cannot accurately obtain the distance between the display and the occluding object using the optical proximity sensor, and further cannot accurately determine whether the display is occluded at this time, and the display cannot be turned off. This greatly increases the possibility of accidental touches, seriously affecting user experience.

### SUMMARY

Embodiments of this application provide a display control method and a terminal device. When a touch operation on a display meets a preset first condition and an attitude change of a terminal device meets a preset second condition, a display turn-off action is performed, thereby improving stability of display turn-off determining.

To achieve the above purpose, the following technical solutions are used in the examples of this application:

According to a first aspect, a display control method and a terminal device are provided. The method includes:

The terminal device determines, based on a touch signal acquired by a touch sensor, whether a touch operation performed on a display meets a preset first condition, determines, based on an attitude signal acquired by an acceleration sensor, whether an attitude change of the terminal device meets a preset second condition, and controls the display to turn off when the touch operation meets the preset first condition and the attitude change of the terminal device meets the preset second condition.

In this embodiment, because a touch signal is acquired when the display is in contact with an occluding object (the face, hair, or the like of a user), when the display is in contact with the occluding object, whether the display is occluded can be effectively determined by detecting, by using the touch sensor, whether the touch operation performed on the display meets the preset first condition. Compared with determining whether the display is occluded by using an optical proximity sensor, a problem that whether the display is occluded cannot be accurately determined by a mobile phone when an object occluding the display is close enough to or even comes into contact with the display and as a result the display cannot be controlled to turn off is avoided, thereby improving stability of display turn-off determining.

In a possible implementation, if the touch operation is performed in a first region of the display, the terminal device determines that the touch operation performed on the display meets the preset first condition when a touch signal value is greater than or equal to a preset first threshold and an area of a touch region is greater than or equal to a preset second threshold.

In this embodiment, it may be distinguished, by determining whether the touch signal value is greater than or equal to the preset first threshold, whether a skin part of the user directly comes into contact with the display, that is, the touch operation is recognized as that skin of a finger, an ear, the face, or the like of the user directly comes into contact with the display. The part that is in direct contact with the display may be distinguished by determining that the area of the touch region is greater than or equal to the preset second threshold. That is, it is recognized that the touch operation is that a large-area skin part such as the face or ear of the user is in contact with the display. When it is recognized that the touch operation is in direct contact with the skin of the user and the large-area skin part is in direct contact, it is determined that the touch operation performed on the display meets the preset first condition. That is, the terminal device determines that the display is occluded, so that the determining process is closer to that in a scenario in which the user actually uses the terminal device, thereby improving applicability of determining.

In a possible implementation, if the touch operation is performed in a first region of the display, the terminal device determines that the touch operation performed on the display meets the preset first condition when a major axis length of the touch region is greater than or equal to a preset third threshold and the touch signal value is greater than or equal to the preset second threshold.

In this embodiment, it may be distinguished, by determining whether the touch signal value is greater than or equal to the preset first threshold, whether a skin part of the user directly comes into contact with the display, that is, the touch operation is recognized as that skin of a finger, an ear, the face, or the like of the user directly comes into contact with the display. The part that is in direct contact with the display may be distinguished by determining that the major axis length of the touch region is greater than or equal to the preset third threshold. That is, it is recognized that the touch operation is that a large-area skin part such as the face or ear of the user is in contact with the display. When it is recognized that the touch operation is in direct contact with the skin of the user and the large-area skin part is in direct contact, it is determined that the touch operation performed on the display meets the preset first condition. That is, the terminal device determines that the display is occluded, so that the determining process is closer to that in a scenario in which the user actually uses the terminal device, thereby improving applicability of determining.

In a possible implementation, the touch signal value is a maximum value of touch point signal values in the touch region or an average value of the touch point signal values in the touch region.

In this implementation, flexibility and adaptability of selection of the touch signal value can be improved.

In a possible implementation, if the touch operation is performed in a second region of the display, the terminal device determines that the touch operation performed on the display meets the preset first condition when a quantity of touch points on the display is greater than or equal to a preset fourth threshold.

In this implementation, in some scenarios in which the user places the terminal device near an ear, it is easy for hair to touch the display. Whether the touch operation is that the hair of the user comes into contact with the display may be distinguished based on whether the quantity of touch points on which the touch operation is performed on the display is greater than the preset fourth threshold, to further recognize whether the touch operation performed on the display meets the preset first condition, so that adaptability for determining that the display is occluded can be improved.

In a possible implementation, the second region includes a first sub-region and a second sub-region, and the first sub-region and the second sub-region are respectively located on two sides of an earpiece.

In this implementation, the first sub-region and the second sub-region are disposed on two sides of the earpiece, and whether a touch operation meets the preset first condition may be recognized in a targeted manner based on that hair of the user comes into contact with a side of the display. In some scenarios in which the user actually moves the terminal device near an ear, based on different left and right hands of the user or different use habits of the user, there may be many touch points on one side that come into contact with the hair of the user, and fewer or even no touch points on the other side that come into contact with the hair of the user. The first sub-region and the second sub-region are disposed on two sides of the earpiece based on an actual application scenario. When a quantity of touch points on which the hair of the user contacts any sub-region is greater than the preset fourth threshold, it may be determined that the display is occluded, so that flexibility and adaptability for determining that the display is occluded can be improved.

In a possible implementation, the terminal device determines that the attitude change of the terminal device meets the preset second condition when a roll angle change value of the terminal device is greater than or equal to a first roll angle determining threshold and a pitch angle change value of the terminal device is greater than or equal to a first pitch angle determining threshold.

In this implementation, whether the attitude change of the terminal device meets the preset second condition may be recognized by determining the pitch angle change value and the roll angle change value of the terminal device.

In a possible implementation, after the terminal device controls the display to turn off, the terminal device controls the display to turn on when it is determined that a distance between an object generating the touch operation and the display is greater than or equal to a preset second distance threshold and that the attitude change of the terminal device meets a preset third condition.

In this implementation, after the display is turned off, the display is controlled to turn on by determining the distance between the display and the occluding object and determining the attitude change of the device, so that completeness of the display control method can be enhanced.

In a possible implementation, the terminal device determines that the attitude change of the terminal device meets the preset third condition when a yaw angle change value of the terminal device is greater than or equal to a second roll angle determining threshold, and/or the pitch angle change value is greater than or equal to a second pitch angle determining threshold, and/or the roll angle change value is greater than or equal to a second roll angle determining threshold.

In this implementation, whether the attitude change of the terminal device meets the preset third condition may be recognized by determining the pitch angle change value and the roll angle change value of the terminal device.

In a possible implementation, the terminal device controls the display to turn off when the touch operation performed on the display meets the preset first condition for first preset duration.

In this implementation, delayed control of the display to turn off may be implemented using the first preset duration, so that after the display is turned on, the display may be controlled to turn off only when the touch operation meets the preset first condition for the first preset duration. In some scenarios in which the face of the user is in contact with the display of the mobile phone for the first preset duration, even if failing to recognize that the attitude of the terminal device meets the preset second condition, the terminal device still performs display turn-off determining, thereby improving flexibility and adaptability of display turn-off determining.

In a possible implementation, when detecting that the earpiece is invoked, the terminal device obtains, based on the touch signal acquired by the touch sensor, the touch operation performed by the user on the display; and obtains the attitude change of the terminal device based on the attitude signal acquired by the acceleration sensor.

In this implementation, the terminal device determines, only when detecting that the earpiece is invoked, whether to control the display to turn off, so that unnecessary resource consumption can be reduced.

In a possible implementation, a proximity sensor is deployed on the terminal device, and the terminal device obtains the distance between the display and the occluding object based on a proximity signal acquired by the proximity sensor; and the terminal device controls, when the display is on, the display to turn off if the distance between the display and the occluding object is less than or equal to a preset first distance threshold and the attitude change of the terminal device meets the preset second condition.

In this implementation, the manner of controlling the display to turn off when the distance between the display and the occluding object is less than or equal to the preset first distance threshold and the attitude change of the terminal device meets the preset second condition is added, so that a plurality of manners of display turn-off determining may be added to the terminal device provided with the proximity sensor, the acceleration sensor, and the touch sensor, thereby improving stability of display turn-off determining.

According to a second aspect, an electronic device is provided, including a processor and a memory. The memory is configured to store computer-executable instructions. When the electronic device runs, the processor executes the computer-executable instructions stored in the memory, to enable the electronic device to perform the method according to any one of the implementations of the first aspect.

According to a third aspect, a computer-readable storage medium is provided. The computer-readable storage medium stores instructions. When the instructions are run on a computer, the computer is enabled to perform the method according to any one of the implementations of the first aspect.

According to a fourth aspect, a computer program product including instructions is provided. When the instructions are run on a computer, the computer is enabled to perform the method according to any one of the implementations of the first aspect.

For technical effects of any one of the designs in the second aspect to the fourth aspect, refer to the technical effects of different designs in the first aspect. Details are not described herein again.

### BRIEF DESCRIPTION OF DRAWINGS

FIG. 1 is a schematic diagram of a scenario to which a method according to an embodiment of this application is applicable;
FIG. 2 is a schematic diagram of a scenario to which a method according to an embodiment of this application is applicable;
FIG. 3 is a schematic diagram of an attitude signal detection principle to which a method according to an embodiment of this application is applicable;
FIG. 4 is a schematic diagram of an optical proximity detection principle to which a method according to an embodiment of this application is applicable;
FIG. 5 is a schematic diagram of a scenario to which a method according to an embodiment of this application is applicable;
FIG. 6 is a schematic diagram of an ultrasonic proximity detection principle to which a method according to an embodiment of this application is applicable;
FIG. 7 is a schematic diagram of a touch signal to which a method according to an embodiment of this application is applicable;
FIG. 8 is a flowchart of a method for determining facial contact to which a method according to an embodiment of this application is applicable;
FIG. 9 is a schematic diagram of a hair recognition region to which a method according to an embodiment of this application is applicable;
FIG. 10 is a schematic diagram of a touch signal recognition region to which a method according to an embodiment of this application is applicable;
FIG. 11 is a schematic diagram of an execution logic of a display control method to which a method according to an embodiment of this application is applicable;
FIG. 12 is a schematic diagram of an execution logic of a display control method to which a method according to an embodiment of this application is applicable;
FIG. 13 is a schematic diagram of a relationship between a proximity optical signal strength curve and a proximity optical signal threshold to which a method according to an embodiment of this application is applicable;
FIG. 14 is a flowchart of a display control method to which a method according to an embodiment of this application is applicable;
FIG. 15 is a schematic diagram of a call settings page to which a method according to an embodiment of this application is applicable;
FIG. 16 is a schematic structural diagram to which a method according to an embodiment of this application is applicable; and
FIG. 17A and FIG. 17B are structural block diagrams to which a method according to an embodiment of this application.

### DESCRIPTION OF EMBODIMENTS

In descriptions of embodiments of this application, terms used in the following embodiments are only intended to describe particular embodiments, and are not intended to limit this application. As used in the specification and the appended claims of this application, the singular expressions "a/an", "said", "the above", "the" and "this" are intended to also include such expressions as "one or more", unless otherwise clearly indicated in the context. It should be further understood that in the following embodiments of this application, "at least one" and "one or more" refer to one, two, or more. The term "and/or" is used for describing an association relationship between associated objects, and indicates that three relationships may exist. For example, A and/or B may represent: Only A exists, both A and B exist, and only B exists, where A and B may be singular or plural. The character "/" generally indicates an "or" relationship between the associated objects.

Reference to "one embodiment" or "some embodiments" described in this specification means that a specific characteristic, structure or feature described in combination with this embodiment is included in one or more embodiments of this application. Therefore, statements "in one embodiment", "in some embodiments", "in some other embodiments", "in other embodiments", and the like in the differences in this specification do not necessarily refer to the same embodiment, but mean "one or more but not all embodiments", unless otherwise specially emphasized in other ways. The terms "include", "have", and their variants all mean "include, but are not limited to", unless otherwise specifically emphasized in another manner. The term "connection" includes a direct connection and an indirect connection, unless otherwise specified. The terms "first" and "second" are used for descriptive purposes only and should not be construed as indicating or implying relative importance or implicitly indicating a quantity of technical features indicated.

In embodiments of this application, the term "example", "for example", or the like is used to represent giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

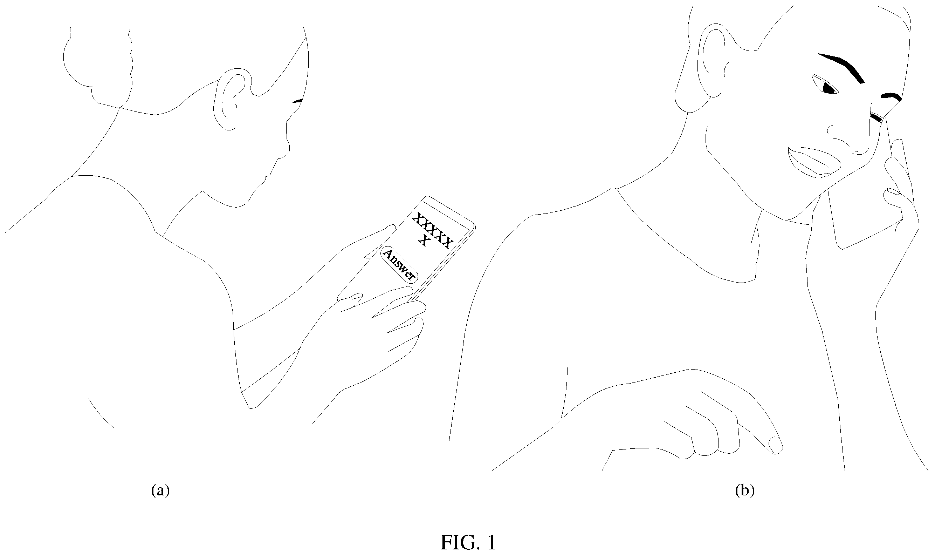

In application scenarios such as making or answering calls or listening to voice messages by a user, as shown in (a) of FIG. 1 and (b) of FIG. 1, the user places a mobile phone near an ear and uses an earpiece to listen to voice. When the user performs this action, a screen (also referred to as a display) of the mobile phone is close to the face and ear of the user, accidental touches occur easily. In addition, the user does not need to touch a display when placing the mobile phone near the ear. Therefore, to prevent accidental touches, when detecting an object covering the display of the mobile phone, the mobile phone turns off the display, and the display does not respond to a touch operation of the user, thereby avoiding accidental touches.

Similar scenarios further include a call making or answering scenario, a short video scenario, and a translation scenario.

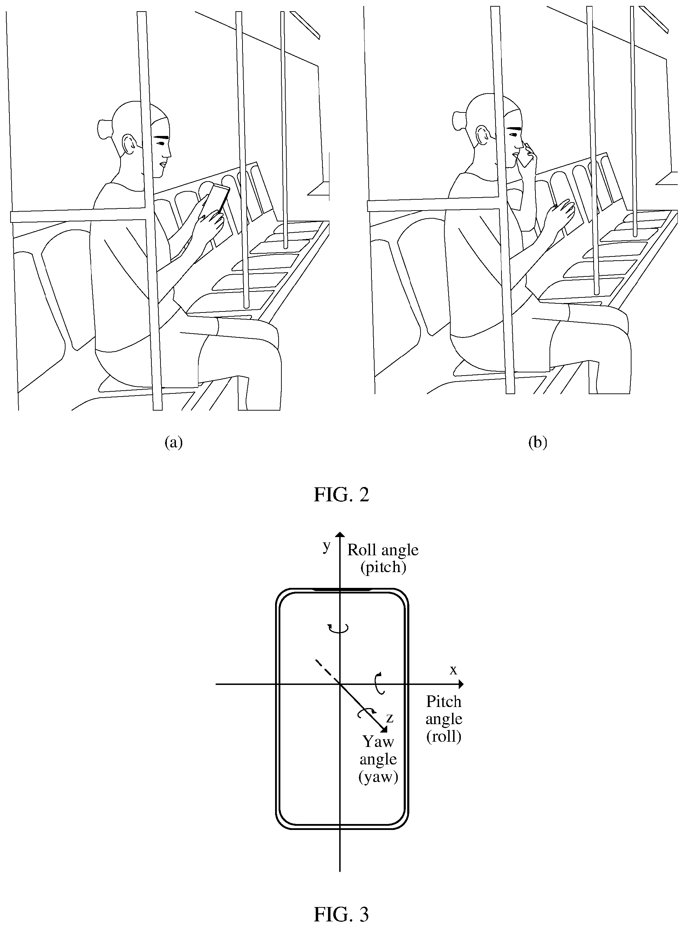

The short video scenario means that when a user browses short videos in silent mode, when needing to obtain sound, the user may hold the mobile phone near an ear and use an earpiece to obtain sound. As shown in FIG. 2, (a) of FIG. 2 shows that the user watches short videos when taking public transportation. In this scenario, the user usually lowers the volume to avoid disturbing others. However, when watching exciting content and intending to get sound information, the user may pick up and place the mobile phone near an ear to obtain sound using the earpiece, as shown in (b) of FIG. 2. In this case, the mobile phone controls a display to be turned off, to prevent a short video from being switched when the face or another part of the user comes into contact with the display.

The translation scenario is that when wanting to obtain sound information of translated audio content, the user may hold the mobile phone near an ear and obtain voice using an earpiece. In these scenarios, the mobile phone may determine, based on an attitude signal, a proximity signal, and a touch signal as well as a corresponding determining condition, whether to perform a display turn-off action, thereby preventing accidental touches. It may be known that the foregoing application scenarios are only some examples of the method. In other application scenarios, a display control method provided in embodiments of this application may be used in any application scenario in which a user needs to pick up and place a mobile phone near an ear and obtain sound information using an earpiece. Examples are not provided herein one by one.

When determining whether to turn off the display, the mobile phone usually performs determining with reference to a signal detected by one or more sensors, for example, information such as an attitude of the mobile phone detected using an acceleration sensor or an inertial measurement unit including an acceleration sensor or presence or absence of an occluding object on the display or a distance between the occluding object and the display detected using a proximity sensor.

An example in which the attitude of the mobile phone is detected using the acceleration sensor is used for description. The acceleration sensor may detect an attitude signal generated when the attitude of the mobile phone changes, and the mobile phone determines an attitude change of the mobile phone based on the attitude signal. The attitude change of the mobile phone may represent a gesture action performed by the user by picking up the mobile phone (the gesture action includes that the user picks up and places the mobile phone near an ear). For example, in a voice call scenario, when the user picks up and places the mobile phone near an ear to make or answer a call, the attitude of the mobile phone changes along with the gesture action of the user. The attitude change of the mobile phone may be summarized using angle change values of three angles. The attitude signal includes angle values of the three angles. The mobile phone may obtain the angle values of the three angles by parsing the attitude signal. As shown in FIG. 3, a coordinate system in the figure uses a case in which the display of the mobile phone faces the front and the body of the mobile phone is vertically disposed, an x-axis is parallel to a short side of the display and passes through the center point of the display, a y-axis is parallel to a long side of the display and passes through the center point of the display, a z-axis passes through the center point of the display perpendicularly, and three angles are a pitch angle for rotation around the x-axis, a roll angle for rotation around the y-axis, and a yaw angle for rotation around the z-axis. The attitude change of the mobile phone and the current attitude of the mobile phone can be determined by angle change values of the three angles. Referring to FIG. 1 and FIG. 2, when the user performs the action of placing the mobile phone near an ear, the attitude of the mobile phone changes. The attitude change may be decomposed into change values of three angles. The mobile phone determines the attitude change of the mobile phone based on the angle change values of the three angles, to determine whether the attitude change of the mobile phone conforms to the attitude of the mobile phone when the user performs the action of picking up and placing the mobile phone near an ear.

It may be known that the example in FIG. 2 is merely described with reference to the attitude change of the mobile phone when the user performs the action of picking up and placing the mobile phone near an ear in a standing posture. When the user performs the action of picking up and placing the mobile phone near an ear in a standing, walking, sitting, and lying posture, the attitude change of the mobile phone is different, and may be specifically set according to an actual situation. Examples are not provided herein one by one.

During processing of recognizing whether the user performs the action of picking up and placing the mobile phone near an ear, the mobile phone determines the attitude change of the mobile phone using the attitude signal detected by the acceleration sensor. If the attitude change of the mobile phone meets a preset first attitude condition (also referred to as a preset second condition), it indicates that the user performs the action of holding the mobile phone near an ear. For example, the determining, based on the attitude signal, that the attitude change of the mobile phone meets the preset first attitude condition includes: a roll angle change value is greater than a first roll angle determining threshold, and a pitch angle change value is greater than a first pitch angle determining threshold, and optionally may further include: a yaw angle change value is less than a first yaw angle determining threshold. With reference to the examples in FIG. 1 and FIG. 2, an example in which the direction the user is facing is the front, the ground is the bottom, and the top of the head of the user is the top is used for description below. During determining of the attitude change of the mobile phone, when the roll angle change value is greater than the first roll angle determining threshold, the attitude of the mobile phone changes from the display facing upward to the display facing leftward or rightward (which specifically depends on whether the user answers a call using the left hand or answers a call using the right hand). When the pitch angle change value is greater than the first pitch angle determining threshold, the attitude of the mobile phone changes from the top of the body facing forward to the top of the body facing upward. When the yaw angle change value is less than the first yaw angle determining threshold, the bottom edge of the body is slightly inclined to the ground or is parallel to the ground.

It may be known that, as shown in the example shown in FIG. 2, when the user takes out and places the mobile phone near an ear, whether the attitude change of the mobile phone meets the preset first attitude condition can be determined only by determining the roll angle change value and the pitch angle change value. However, for more accurate identification and to deal with some other use scenarios (for example, sitting, lying, or walking), determining of the yaw angle change value may further be added. This is specifically set according to an actual application. Examples are not provided herein one by one.

An example in which the proximity sensor is used to detect whether the display is occluded is used. The proximity sensor may detect a proximity signal, and the mobile phone may determine, based on the proximity signal, the distance between the display and the occluding object covering the display. For example, the proximity sensor includes an optical proximity sensor, an ultrasonic proximity sensor, and the like. The optical proximity sensor detects a proximity optical signal, and the ultrasonic proximity sensor detects an ultrasonic signal. The proximity optical signal and the ultrasonic signal are both proximity signals.

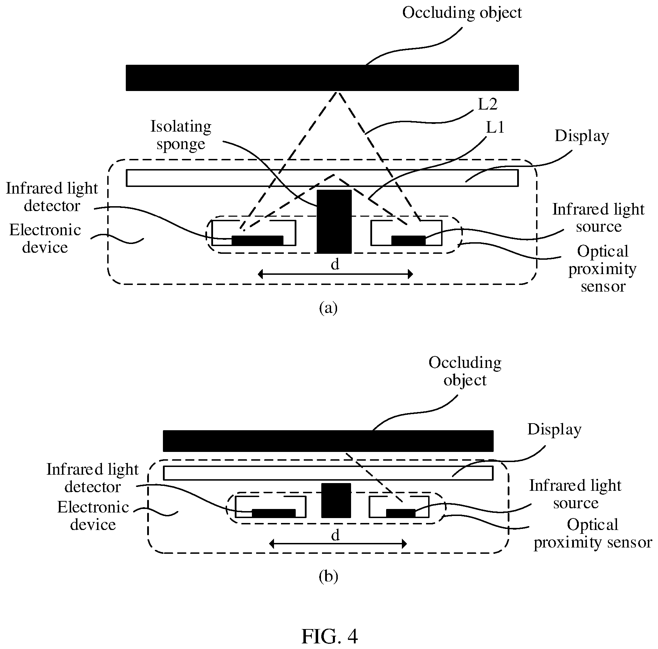

As shown in (a) of FIG. 4, the optical proximity sensor includes an infrared light source and an infrared light detector that are disposed below the display. An infrared signal emitted by the infrared light source is reflected and detected by the infrared light detector. For an infrared signal (which may also be referred to as a proximity optical signal) detected by the infrared light detector, the infrared signal detected by the infrared light detector may be divided into two parts. As shown by an optical path L1 in (a) of FIG. 4, the first part is an infrared signal detected by the infrared light detector after the infrared signal is reflected or diffracted by the display or an internal structural member. A black isolating sponge disposed between the infrared light source and the infrared light detector can reduce the strength value of this part of the infrared signal. As shown in an optical path L2 in (a) of FIG. 4, the second part is an infrared signal that is obtained after an infrared signal is transmitted through the display and reflected by the external occluding object and that is detected by the infrared light detector. This part of the infrared signal is used for determining the distance between the display of the mobile phone and the occluding object covering the display. Without considering an air gap between the infrared light source and the display, the thickness of the display, and the like, a larger strength value of the infrared signal detected by the infrared light detector indicates a shorter distance between the display of the mobile phone and the occluding object.

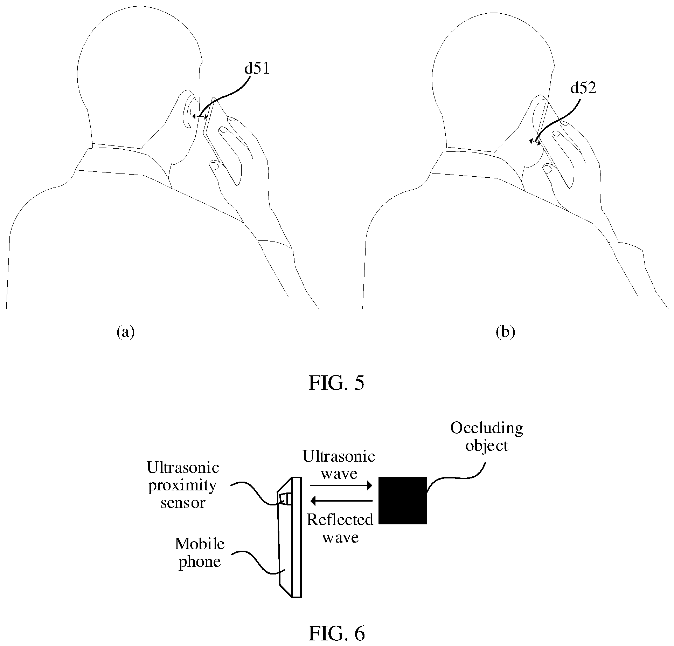

During processing of recognizing whether the display is occluded by an occluding object, a first proximity optical signal threshold may be set according to a relationship between the strength value of the proximity optical signal and the distance between the display and the occluding object. The mobile phone determines, using the proximity optical signal detected by the optical proximity sensor, the distance between the display and the occluding object covering the display. If the strength value of the proximity optical signal is equal to the first proximity optical signal threshold, the distance between the display and the occluding object is equal to a preset first distance threshold. The preset first distance threshold indicates that the mobile phone determines that the display is occluded if the distance between the display and the occluding object is less than or equal to the preset first distance threshold. For example, in some voice call scenarios, when the user picks up and places the mobile phone near an ear, the distance between the display and the face of the user gradually decreases. FIG. 5 is an exemplary diagram of a scenario. In (a) of FIG. 5, the distance between the display of the mobile phone and the face of the user is d51. The mobile phone compares the proximity optical signal detected by the optical proximity sensor with the first proximity optical signal threshold. A comparison result is that the strength value of the proximity optical signal is less than the first proximity optical signal threshold. In this case, the mobile phone determines that the display is not occluded by an occluding object. In (b) of FIG. 5, the distance between the display of the mobile phone and the face of the user is d52. The mobile phone compares the proximity optical signal detected by the optical proximity sensor with the first proximity optical signal threshold. A comparison result is that the strength value of the proximity optical signal is greater than the first proximity optical signal threshold. In this case, the mobile phone determines that the display is occluded.

As shown in FIG. 6, the ultrasonic proximity sensor includes an earpiece having a capability of emitting ultrasonic waves and a microphone having a capability of receiving ultrasonic waves. An ultrasonic wave from the earpiece touches an occluding object and is reflected and received by the microphone. A distance between the display and the occluding object may be determined based on a strength value of the ultrasonic signal received by the microphone. A larger strength value of the ultrasonic signal indicates a shorter distance between the display and the occluding object. It may be known that similar to the foregoing example in which the mobile phone determines, using the optical proximity sensor, whether the display is occluded by an occluding object, a first ultrasonic signal threshold may be set according to a relationship between the strength value of the ultrasonic signal and the distance between the display and the occluding object. The mobile phone determines, using the ultrasonic signal detected by the ultrasonic proximity sensor, the distance between the display and the occluding object covering the display. If the strength value of the ultrasonic signal is equal to the first ultrasonic signal threshold, the distance between the display and the occluding object is equal to the preset first distance threshold. If the strength value of the ultrasonic signal is greater than the first ultrasonic signal threshold, the distance between the display and the occluding object is less than the preset first distance threshold. When the distance between the display and the occluding object is equal to or less than the preset first distance threshold, the mobile phone determines that the display is occluded.

It should be noted that because a specific determining process of determining the distance between the display and the occluding object by the ultrasonic proximity sensor is similar to that of the optical proximity sensor, in an implementation of using the optical proximity sensor mentioned in the following embodiments of this application, the optical proximity sensor may be replaced with the ultrasonic proximity sensor, or the ultrasonic proximity sensor is used based on the optical proximity sensor. This is not described in embodiments of this application again.

In some current accidental touch prevention solutions for a display, a mobile phone detects an attitude change of the mobile phone using an acceleration sensor, determines a distance between the display and an occluding object using an optical proximity sensor, and controls the display to turn off when it is determined that the attitude change of the mobile phone meets a preset first attitude condition and the distance between the display and the occluding object is less than or equal to a preset first distance.

However, in some scenarios, when a black occluding object (for example, hair) having a small size from the outside is excessively close to or in contact with the display of the mobile phone, infrared light emitted by the infrared light source irradiates the black occluding object, and reflectivity of the infrared light is greatly reduced. This part of reflected infrared light cannot be received by the infrared light detector, or is only partially received by the detector. Consequently, an obtained strength value of a proximity optical signal cannot accurately reflect the distance between the display and the occluding object. That is, even if the distance between the display and the occluding object is less than the preset first distance threshold at this time, the mobile phone should determine that the display is occluded. However, because the strength value of the proximity optical signal is less than the first proximity optical signal threshold, the mobile phone does not determine that the display is occluded. Referring to (b) of FIG. 4, d is the distance between the center of the infrared light detector of the optical proximity sensor and the center of the infrared light source. When d is not 0, if an external black occluding object is close enough to the display and infrared light emitted by the infrared light source is transmitted through the display to irradiate the occluding object, the strength value of the reflected proximity optical signal received by the infrared light detector is far less than the first proximity optical signal threshold. That is, the infrared light detector and the infrared light source cannot achieve effective light transmission. In this case, although the distance between the display and the occluding object is already less than the preset first distance threshold, because the strength value of the proximity optical signal is less than the first proximity optical signal threshold, the mobile phone cannot accurately determine that the display is occluded, and as a result, the display cannot be turned off. This problem is usually referred to as an optical proximity light black hair issue.

Because the optical proximity sensor is usually disposed at the top of the mobile phone, the position of an earpiece or a front-facing camera is easily close to the hair of the user. When the user picks up and places the mobile phone near an ear, the optical proximity light black hair issue easily occurs. Consequently, the mobile phone fails to perform correct display turn-off determining. In this case, even if the mobile phone accurately determines, based on the attitude signal, that the attitude change of the mobile phone meets the preset first attitude condition, because the mobile phone incorrectly determines the distance between the display and the occluding object, the mobile phone does not turn off, thereby greatly increasing a possibility of accidental touches, and degrading user experience.

Embodiments of this application provide a display control method, which may be applied to a terminal device. The terminal device may be a mobile phone. The mobile phone determines, based on a touch signal and a preset touch condition (also referred to as a preset first condition), whether a display is occluded, thereby avoiding an optical proximity light black hair issue that occurs when an optical proximity sensor is used. For example, an effective touch operation performed by a user on a display is usually completed by using a finger. The effective touch operation means that the user wants to obtain an operation result through the touch operation. The operation result is, for example, starting an application, switching an interface, or inputting information. However, when the user takes out and places the mobile phone near an ear, parts such as the face, ear, or hair of the user may contact the display. The contact is not effective contact. That is, the user does not expect to obtain an operation result through contact between the display and the face, ear, or hair. Whether the touch operation is that the part such as the face, ear, or hair of the user is in contact is determined by analyzing characteristics when the part such as the face, ear, or hair of the user is in contact with the display and characteristics when a finger of the user is in contact with the display. When it is determined that the touch operation is that the part such as the face, ear, or hair of the user is in contact, it is determined that the display is occluded.

For example, the preset touch condition may be set based on the characteristics when the part such as the face, ear, or hair of the user is in contact with the display and the characteristics when a finger of the user is in contact with the display. The preset touch condition may include, for example, determining a signal value, a touch signal region, a quantity of touch points, and the like of a touch signal and a corresponding touch signal threshold (also referred to as a preset first threshold), an area threshold (also referred to as a preset second threshold) of the touch region, a length threshold (also referred to as a preset third threshold) of the touch region, a touch point quantity threshold (also referred to as a preset fourth threshold), and the like. If the touch signal meets the preset touch condition, it is determined that the display is occluded.

In some implementations, determining, based on the touch signal, that the touch operation performed on the touchscreen is facial contact of the user is determining that the touch signal meets one of the preset touch conditions.

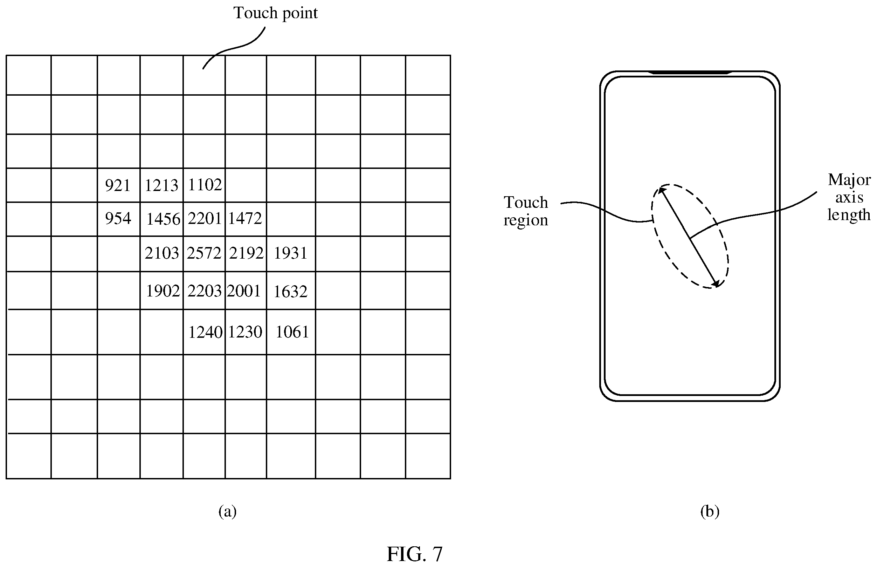

For example, facial contact means that the mobile phone determines that large-area skin of the face or ear of the user comes into contact with the display of the mobile phone. When determining whether facial contact is performed, the mobile phone determines, based on a touch signal, an area of a touch region or a major axis length of a touch region and a touch signal value, to determine whether facial contact is performed. As a schematic diagram of a touch signal shown in FIG. 7, (a) of FIG. 7 shows that the display is formed by a plurality of touch points, the touch points have equal areas. A touch point having a value in the figure is represented as a touch point at which a touch signal is acquired, and a region occupied by the touch points at which the touch signal is acquired is a touch region. (b) of FIG. 7 shows that a touch region is approximately ellipse, including a major axis length and a minor axis length. A sum of areas of the touch points at which the touch signal is acquired is the touch area, and a value of each touch point is a normalized capacitance change value, and may also be referred to as a touch signal value. For example, in a case of good contact, the value is 3000. Generally, when a skin part such as the hand or face of the user is in contact with the display, the touch signal value is high because the contact is good. When clothing of the user or the skin is in contact with the display through clothing, a touch signal value is low because the contact is poor.

The mobile phone determines, based on the touch region and the touch signal value, whether facial contact occurs. The touch signal value is a signal value corresponding to the touch region. For example, the touch signal value may be a maximum value of touch point signal values in the touch region or an average value of the touch point signal values in the touch region.

In an implementation, facial contact is determined if the touch signal value is greater than or equal to the preset touch signal threshold and the area of the touch region is greater than or equal to a first threshold. The first threshold may be a touch area threshold.

In another implementation, facial contact is determined if the touch signal value is greater than or equal to the touch signal threshold and the major axis length of the touch region is greater than or equal to a first threshold. The first threshold may be a length threshold.

When the condition is met in one of the foregoing two implementations, facial contact may be determined.

The touch signal threshold may be set based on a touch signal value of directly touching the display by skin (in a handheld scenario) and a touch signal value when clothing or skin covered by clothing comes into contact with the display (in a pocket scenario). The touch signal threshold is greater than the touch signal value when clothing or skin covered by clothing comes into contact with the display, and is less than a touch signal value of directly touching the display by skin. Setting the touch signal threshold to be greater than the touch signal value when clothing or skin covered by clothing comes into contact with the display is to distinguish a pocket scenario from a handheld scenario, and in other words, to distinguish whether the display is occluded by the face of the user or occluded by clothing of the user. Specifically, in the foregoing example, it has been described that when clothing or skin covered by clothing is in contact with the display, the touch signal value detected by the display less than the touch signal value detected when skin directly comes into contact with the display. Through this characteristic, facial contact can be effectively recognized by setting the touch signal threshold to be greater than the touch signal value when clothing or skin covered by clothing comes into contact with the display in combination with other features, for example, area determining of a touch region or major axis length determining of a touch region.

The touch area threshold may be set based on a touch area when a finger of the user comes into contact with the display and a touch area when the face of the user comes into contact with the display. The touch area threshold is greater than the touch area when the finger comes into contact with the display and is less than the touch area when the face comes into contact. The length threshold may be set based on a major axis length of a touch region when a finger of the user comes into contact with the display and a major axis length of a touch region when the face of the user comes into contact with the display. The length threshold is greater than the major axis length of the touch region when the finger comes into contact with the display and is less than the major axis length of the touch region when the face of the user comes into contact with the display.

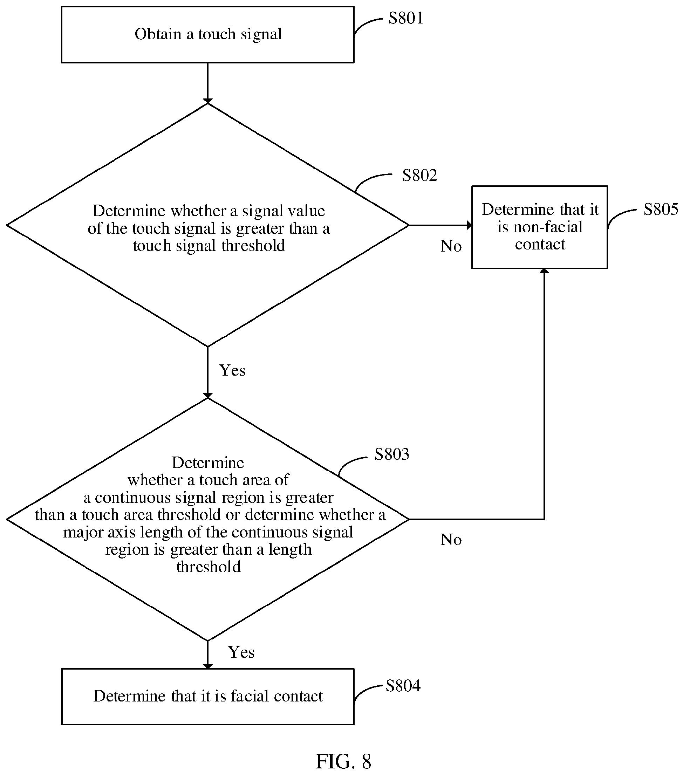

For example, as shown in FIG. 8, embodiments of this application further provide a method for determining facial contact in the handheld scenario, applied to a terminal device. The determining process includes S801 to S805.

S801: Obtain a touch signal.

The terminal device obtains a touch signal performed on a touchscreen.

For example, the touch signal performed on the touchscreen includes: a touch signal generated when the face of the user comes into contact with the touchscreen, a touch signal generated when a finger of the user comes into contact with the touchscreen, or a touch signal generated when another skin part covered by clothing comes into contact with the touchscreen.

S802: Determine whether a signal value of the touch signal is greater than a touch signal threshold, and if the signal value of the touch signal is greater than the touch signal threshold, perform S803, or if the signal value of the touch signal is not greater than the touch signal threshold, perform S805.

The terminal device determines the signal value of the touch signal. If the signal value is greater than the touch signal threshold, it indicates that the signal value of the touch signal is a touch signal generated when the finger, face, or ear of the user directly comes into contact with the touchscreen. If the signal value is less than the touch signal threshold, it indicates that the signal value of the touch signal is a touch signal generated when another skin part covered by clothing of the user comes into contact with the touchscreen.

S803: Determine whether a touch area of a continuous signal region is greater than a touch area threshold or determine whether a major axis length of the continuous signal region is greater than a length threshold, and if the touch area is greater than the touch area threshold or the major axis length is greater than the length threshold, perform S804, or if the touch area is not greater than the touch area threshold or the major axis length is not greater than the length threshold, determine that the touch signal does not meet a preset touch condition, and perform S805.

If there are a plurality of continuous signal regions, a touch area and a major axis length of a continuous signal region having the largest area are determined.

After determining that the signal value of the touch signal is greater than the touch signal threshold, the terminal device further processes the touch signal. Two processing manners are included. The first processing manner is: determining whether the touch area of the continuous signal region is greater than the touch area threshold, where if the touch area of the continuous signal region is greater than the touch area threshold, it indicates that the touch signal is a touch signal generated when skin of the face, ear, or the like of the user directly comes into contact with the touchscreen, and if the touch area of the continuous signal region is less than the touch area threshold, it indicates that the touch signal is a signal generated when a finger of the user directly comes into contact with the touchscreen. The second processing manner is: determining whether the major axis length of the continuous signal region is greater than the length threshold, where if the major axis length of the continuous signal region is greater than the length threshold, it indicates that the touch signal is a touch signal generated when skin of the face, ear, or the like of the user directly comes into contact with the touchscreen, and if the major axis length of the continuous signal region is less than the length threshold, it indicates that the touch signal is a signal generated when a finger of the user directly comes into contact with the touchscreen. When the condition is met in one of the two processing manners, it may be determined that the touch signal meets the preset touch condition.

S804: Determine that it is facial contact.

S805: Determine that it is non-facial contact.

For example, the touch area threshold may be set to 900 mm², and the length threshold may be set to 30 mm.

It may be known that setting of the touch signal, the touch area, and the length threshold specifically needs to be considered based on actual factors such as a material and a size of the display. Embodiments of this application are merely described by using an example, and constitutes no limitation to specific values.

In some implementations, determining, based on the touch signal, that the touch operation performed on the touchscreen is hair contact of the user is determining that the touch signal meets one of the preset touch conditions.

For example, when it is determined, based on the touch signal, whether an operation performed on the display meets the preset touch condition, it may be determined, based on the touch signal, whether it is hair contact, and if it is hair contact, it is determined that the preset touch condition is met.

Optionally, if a quantity of triggered touch points detected in a second region (a hair recognition region) of the display is greater than or equal to a preset touch point quantity threshold, it is determined that it is hair contact. The preset touch point quantity threshold may be set according to an actual requirement.

Optionally, the hair recognition region may be set in a region close to the top of the display.

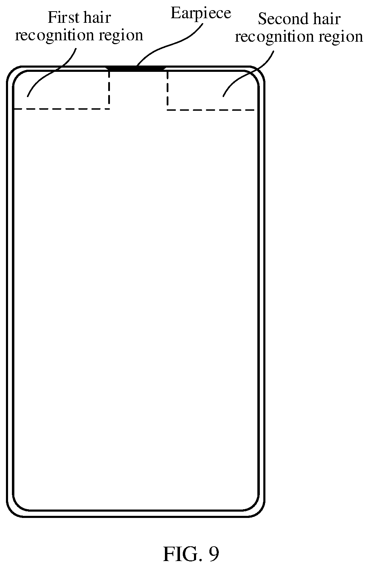

Optionally, two hair recognition regions may be disposed. As shown in FIG. 9, a first hair recognition region is disposed on the left side of an earpiece, and a second hair recognition region is disposed on the right side of the earpiece. In some implementations, when the user picks up and places the mobile phone near an ear, if the user uses the left hand to place the mobile phone near the ear, the second hair recognition region easily comes into contact with the hair of the user. If the user uses the right hand to place the mobile phone near an ear, the first hair recognition region easily come into contact with the hair of the user. When touch signals are concentrated in any one of the hair recognition regions, the touch signal can be more accurately recognized as hair contact.

It may be learned that the first hair recognition region and the second hair recognition region are not strictly divided based on regions shown in FIG. 9, and sizes and positions of the first hair recognition region and the second hair recognition region may be adjusted according to an actual situation. Details are not described in embodiments of this application.

In some implementations, when facial contact and hair contact are determined, a facial recognition region (also referred to as a first region) and a hair recognition region (also referred to as a second region) may be set on the display. When the touch signal meets hair contact or facial contact, it is determined that the touch signal meets the preset touch condition. Alternatively, when the touch signal meets hair contact and meets facial contact, it is determined that the touch signal meets the preset touch condition.

Optionally, regions may not be distinguished. Whether the touch operation is hair contact or facial contact is determined in a region (for example, a touch region of an entire display of the mobile phone).

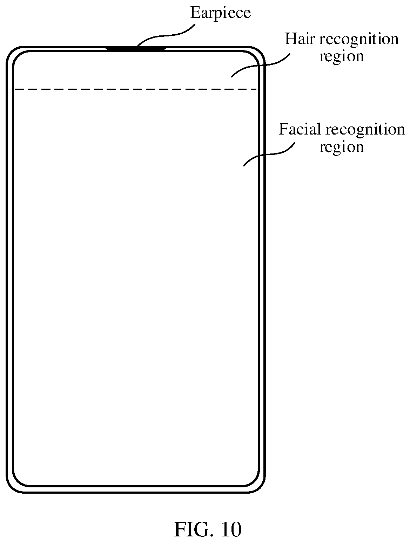

As shown in a schematic diagram of a touch signal recognition region in FIG. 10, a hair recognition region is disposed at a position close to the earpiece of the display of the mobile phone. The facial recognition region is disposed below the display and in contact with a bottom edge of the hair recognition region.

In addition, it may be further set that edges of the hair recognition region and the facial recognition region are not in contact or in partial contact, or the two regions partially overlap. Examples are not provided herein one by one.

In the foregoing example, embodiments of this application describe in detail a specific implementation method of recognizing, using a touch sensor instead of a proximity optical sensor, whether the display is occluded. Because the touch sensor does not have a proximity light black hair issue of the optical proximity sensor, compared with the optical proximity sensor, whether the display is occluded can be more reliably recognized, thereby reducing a possibility of accidental touches.

In some actual applications, either the optical proximity sensor or the ultrasonic proximity sensor needs to additionally increase hardware costs. The optical proximity sensor needs to additionally add an infrared light source and an infrared light detector. The ultrasonic proximity sensor requires that the earpiece of the mobile phone have a capability of emitting ultrasonic waves and a microphone have a capability of receiving ultrasonic waves. Ultrasonic waves are more vulnerable to interference and incur high power consumption. In the display control method provided in embodiments of this application, because a touch sensor is an essential component for a mobile phone to perform touch interaction, on a mobile phone having a touch function, whether a display is occluded is determined using a touch sensor without additionally adding hardware, thereby reducing hardware costs and achieving good economy.

Embodiments of this application provide a display control method. A mobile phone detects a touch operation performed on the mobile phone using a touch sensor, detects an attitude of the mobile phone using an acceleration sensor, and controls the mobile phone to turn off when it is determined that the touch operation is a touch operation generated by contact with a part such as the face, ear, or hair of a user and it is determined that the attitude of the mobile phone is an attitude when the user picks up and places the mobile phone near an ear. The two determining processes are independent of each other and are not associated with each other. The mobile phone performs an action of turning off a display when results of the two determining processes are both yes, so that stability of display turn-off determining can be improved, thereby reducing a probability of incorrectly controlling the display to turn off.

For example, in some actual scenarios in which the user listens to voice information, an accidental touch prevention method provided in embodiments of this application is applied, and the mobile phone controls, based on a touch signal detected by the touch sensor and an attitude signal detected by the acceleration sensor, the display to turn off.

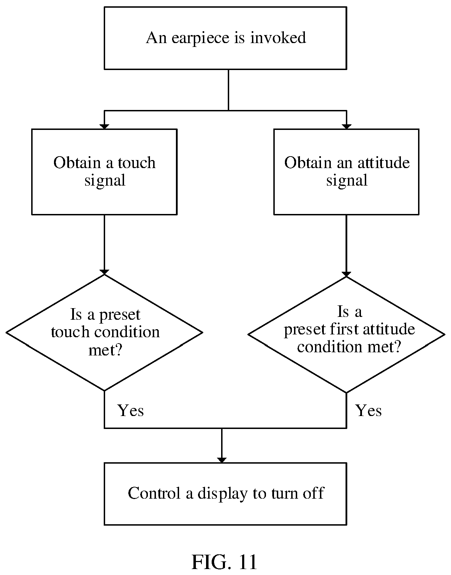

As shown in FIG. 11, the mobile phone performs the following process of controlling the display to turn off: when detecting that an earpiece is invoked, the mobile phone obtains a touch signal detected by the touch sensor, determines the touch signal, and determines whether a touch operation performed on the display meets a preset touch condition; obtains an attitude signal detected by the acceleration sensor, determines the attitude signal, and determines whether an attitude change of the mobile phone meets a preset first attitude condition; and controls, when it is determined that the touch operation performed on the display meets the preset touch condition and it is determined that the attitude change of the mobile phone meets the preset first attitude condition, the display to turn off.

In the display control method provided in embodiments of this application, based on the foregoing determining, using the touch sensor and the acceleration sensor, whether to control the display to turn off, an optical proximity sensor may be further added. The mobile phone detects a proximity optical signal using the optical proximity sensor, detects a touch signal using the touch sensor, and detects an attitude signal using the acceleration sensor. The mobile phone determines, based on the proximity optical signal, the touch signal, and the attitude signal and a corresponding determining condition, whether to control the display to turn off. In this way, when the optical proximity sensor has an optical proximity light black hair issue, the mobile phone may further determine, based on the touch signal detected by the touch sensor and the attitude signal detected by the acceleration sensor, whether to control the display to turn off, to avoid that the display does not turn off due to optical proximity light black hair issue when the optical proximity sensor is used.

For example, in some actual scenarios in which the user listens to voice information, an accidental touch prevention method provided in embodiments of this application is applied, and the mobile phone controls, based on a touch signal detected by the touch sensor, an attitude signal detected by the acceleration sensor, and a proximity signal detected by the proximity sensor, the display to turn off. The proximity sensor includes an optical proximity sensor and an ultrasonic proximity sensor.

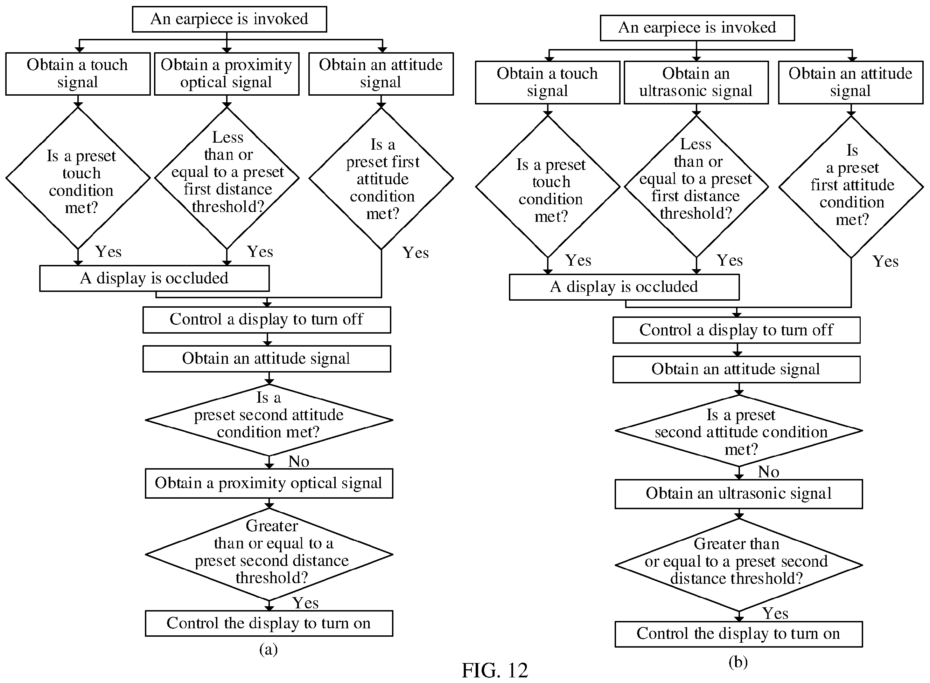

In some scenarios in which the user makes or answers calls, in a process in which the user takes out the mobile phone to view information about an incoming call, taps an operation control for answering the call, holds the phone near an ear for the call, and moves the mobile phone away from the ear and hangs up the call, as shown in (a) of FIG. 12, the touch sensor, the optical proximity sensor, and the acceleration sensor are deployed at an end of the mobile phone, and the mobile phone performs the following process: the mobile phone detects that the earpiece is invoked, obtains a touch signal detected by the touch sensor, determines the touch signal, and determines whether a touch operation performed on the display meets the preset touch condition; obtains an attitude signal detected by the acceleration sensor, determines the attitude signal, and determines whether an attitude change of the mobile phone meets the preset first attitude condition; and obtains a proximity optical signal detected by the optical proximity sensor, determines the proximity optical signal, and determines whether a distance between the display and the face of the user is less than or equal to the preset first distance threshold. When it is determined that the touch operation meets the preset touch condition and/or it is determined that the distance between the display and the face of the user is less than or equal to the preset first distance threshold, the mobile phone determines that the display is occluded. When it is determined that the attitude of the mobile phone meets the preset first attitude condition, the mobile phone controls the display to turn off. After the display is turned off, the mobile phone obtains the attitude signal detected by the acceleration sensor, and determines, based on the attitude signal, whether the attitude of the mobile phone meets a preset second attitude condition (also referred to as a preset third condition). If it is determined that the attitude change of the mobile phone meets the preset second attitude condition, the mobile phone obtains the proximity optical signal detected by the optical proximity sensor, and determines, based on the proximity optical signal, whether the distance between the display and the face of the user is greater than or equal to a preset second distance threshold. If it is determined that the distance between the display and the face of the user is greater than or equal to the preset second distance threshold, the mobile phone controls the display to turn on.

The mobile phone may alternatively replace the optical proximity sensor with an ultrasonic proximity sensor disposed at an earpiece position of the device. The foregoing process of determining the distance between the display and the face of the user is performed. For example, as shown in (b) of FIG. 12, the touch sensor, the ultrasonic proximity sensor, and the acceleration sensor are deployed at an end of the mobile phone, and the mobile phone performs the following process: the mobile phone detects that the earpiece is invoked, obtains a touch signal detected by the touch sensor, determines the touch signal, and determines whether a touch operation performed on the display meets the preset touch condition; obtains an attitude signal detected by the acceleration sensor, determines the attitude signal, and determines whether an attitude change of the mobile phone meets the preset first attitude condition; and obtains an ultrasonic signal detected by the ultrasonic proximity sensor, determines the ultrasonic signal, and determines whether a distance between the display and the face of the user is less than or equal to the preset first distance threshold. When it is determined that the touch operation meets the preset touch condition and/or it is determined that the distance between the display and the face of the user is less than or equal to the preset first distance threshold, the mobile phone determines that the display is occluded. When it is determined that the attitude of the mobile phone meets the preset first attitude condition, the mobile phone controls the display to turn off. After the display is turned off, the mobile phone obtains the attitude signal detected by the acceleration sensor, and determines, based on the attitude signal, whether the attitude of the mobile phone meets a preset second attitude condition. If it is determined that the attitude change of the mobile phone meets the preset second attitude condition, the mobile phone obtains the ultrasonic signal detected by the ultrasonic proximity sensor, and determines, based on the ultrasonic signal, whether the distance between the display and the face of the user is greater than or equal to a preset second distance threshold. If it is determined that the distance between the display and the face of the user is greater than or equal to the preset second distance threshold, the mobile phone controls the display to turn on.

It may be known that, determining, based on the ultrasonic signal, whether the distance between the display and the face of the user is less than or equal to the preset first distance threshold is the same as determining, based on the proximity optical signal, whether the distance between the display and the face of the user is less than or equal to the preset first distance threshold, and determining, based on the ultrasonic signal, whether the distance between the display and the face of the user is greater than or equal to the preset second distance threshold is the same as determining, based on the proximity optical signal, whether the distance between the display and the face of the user is greater than or equal to the preset second distance threshold.

In the foregoing example, there is no particular execution sequence when the mobile phone determines, based on the touch signal, the attitude signal, the proximity optical signal, and the corresponding determining conditions, whether to control the display to turn off. The mobile phone may determine, based on each of the three signals at the same time or based on any one of the signals first or based on any two of the signals first, whether to control the display to turn off. This is not specifically limited in embodiments of this application.

After the mobile phone controls the display to turn off, embodiments of this application further provide an example of controlling the display to turn on. The following describes the example of controlling the display to turn on in embodiments of this application in detail.

In an implementation, after the mobile phone controls the display to turn off, the mobile phone continues to detect the attitude signal using the acceleration sensor, and the mobile phone determines the attitude of the mobile phone based on the attitude signal. If the attitude of the mobile phone meets the preset second attitude condition, it indicates that the user takes the mobile phone away from the ear. After the attitude of the mobile phone meets the preset second attitude condition, the mobile phone detects the proximity optical signal using the optical proximity sensor. If a strength value of the proximity optical signal is less than a second proximity optical signal threshold, the mobile phone controls the display to turn on. It should be noted that the second proximity optical signal threshold is less than the first proximity optical signal threshold.

In some actual applications, the user holds the mobile phone and hangs up the phone, or the user locks the screen and then places the mobile phone in a pocket after the peer party hangs up the call, the attitude of the mobile phone changes. When the mobile phone controls the display to lock the screen, the mobile phone determines the attitude change of the mobile phone based on the attitude signal. When the attitude change of the mobile phone meets the preset second attitude condition, the mobile phone determines a distance between the display and an occluding object, and controls, when a strength value of the proximity optical signal is less than the second proximity optical signal threshold, that is, the distance between the display and the occluding object is less than the preset second distance threshold, the display to turn on. Two determining conditions for determining the attitude of the mobile phone and determining the distance between the display and the occluding object are used to control the display to turn on, so that stability of accidental touch prevention can be improved.

The preset second attitude condition includes: when a yaw angle change value of the mobile phone is greater than or equal to a second yaw angle determining threshold, a pitch angle change value is greater than or equal to a second pitch angle determining threshold, a roll angle change value is greater than or equal to a second roll angle determining threshold. When any one or more of the three angle change values meets the threshold, it is determined that the attitude change of the mobile phone meets the preset second attitude condition.

In some examples, during determining of whether the distance between the display and the occluding object is greater than or equal to the preset second distance threshold, the second proximity optical signal threshold may be set. If the strength value of the proximity optical signal is equal to the second proximity optical signal threshold, the distance between the display and the occluding object is equal to the preset second distance threshold, or when the strength value of the proximity optical signal is less than the second proximity optical signal threshold, the distance between the display and the occluding object is greater than the preset second distance threshold.

The foregoing examples separately describe determining, by comparing the strength value of the proximity optical signal with the first proximity optical signal threshold, whether the display is occluded and determining, by comparing the strength value of the proximity optical signal with the second proximity optical signal threshold, whether an occluding object is already far away from the display. The first proximity optical signal threshold and the second proximity optical signal threshold are described in detail below.

For example, a manner of determining the first proximity optical signal threshold and the second proximity optical signal threshold is shown in the following Table 1.

**Table 1**

| | |
|---|---|
| P_wave | P1-P0 |
| P_window | P2-P1 |
| P_wave+P_window | P2-P0 |
| First proximity optical signal threshold | P_wave+P_window |
| Second proximity optical signal threshold | P_wave |

P0 represents a strength value of the proximity optical signal detected by the optical proximity sensor when no object occludes the display, and the value may be considered as external environmental interference and a strength value (which may also be referred to as the noise floor) of a proximity optical signal reflected or refracted by the display or internal structural member. P1 represents a strength value of the proximity optical signal detected by the optical proximity sensor when an object at a first preset distance from the display occludes the display; and P2 represents a strength value of the proximity optical signal detected by the optical proximity sensor when an object at a second preset distance from the display occludes the display. The first preset distance and the second preset distance may be set according to actual applications. For example, the first preset distance may be set to 50 mm, and the second preset distance may be 30 mm. P_wave is a first threshold component, is obtained according to P1-P0, and represents a strength value of the proximity optical signal that is reflected by the object at the first preset distance from the display and that is detected by the optical proximity sensor after the external environmental interference is excluded (with P0 subtracted). P_window is a second threshold component, is obtained according to P2-P1, and represents a difference between the signal value (P2) of the proximity light with the object at the second preset distance from the display and the signal value P1 of the proximity light with the object at the first preset distance from the display. The first proximity optical signal threshold is a sum of the first threshold component and the second threshold component, is obtained according to P2-P0, and represents a value obtained by subtracting the external environmental interference and the noise floor (P0) from the signal value (P2) of proximity light that is reflected by the object at the second preset distance from the display and that is detected by the optical proximity sensor. The second proximity optical signal threshold is the first threshold component, is obtained according to P1-P0, and represents a value obtained by subtracting the external environmental interference and the noise floor (P0) from the signal value (P1) of proximity light that is reflected by the object at the first preset distance from the display and that is detected by the optical proximity sensor.

In short, the example of determining the first proximity optical signal threshold and the second proximity optical signal threshold in the foregoing Table 1 and examples may represent an actual proximity optical signal threshold corresponding to the distance between the display and ant occluding object after the impact of the external environmental interference and the noise floor are filtered out. For example, the value obtained from P2-P0 reflects a strength value of the proximity optical signal when the distance between the display and the occluding object is 30 mm. It may be known that during actual applications, mobile phones with different internal structures, optical proximity sensors with different models, and different test environments all have some impacts on the value of P0. A specific value may be set according to an actual application, and is not limited in embodiments of this application.

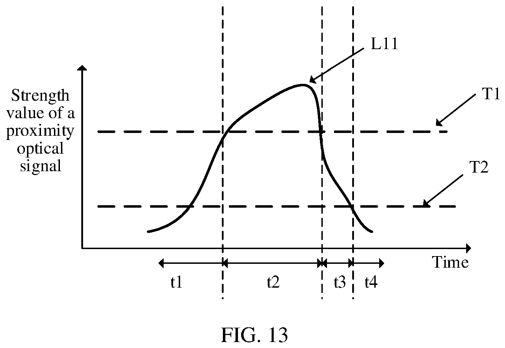

For example, the first proximity optical signal threshold and the second proximity optical signal threshold are set, and the first proximity optical signal threshold is greater than the second proximity optical signal threshold. When the mobile phone determines whether the distance between the display and the occluding object is greater than or equal to the second distance threshold, if the distance between the display and the occluding object does not change enough to make the signal value of the proximity optical signal less than or equal to the second proximity optical signal threshold, the mobile phone makes no determination. A scenario in which the user makes or answers calls is used as an example. When the user answers an incoming call and places the mobile phone near an ear, the distance between the display of the mobile phone and the face of the user gradually decreases. In a call process of the user, the distance between the display of the mobile phone and the face of the user remains within a distance range. When the user hangs up the call and takes the mobile phone away, the distance between the display of the mobile phone and the face of the user gradually increases. For example, as shown in FIG. 13, a horizontal axis in FIG. 13 represents time from a moment at which the user picks up and places the mobile phone near an ear to a moment at which the mobile phone is taken away from the ear, and a vertical axis represents the strength value of the proximity optical signal. In the figure, a curve L11 represents a curve of the strength value of the proximity optical signal detected within a period of time, a line segment T1 is the first proximity optical signal threshold, and a line segment T2 is the second proximity optical signal threshold. In a time period t1, a section of the curve L11 that is located below the line segment T1 represents that the distance between the display and the face of the user is greater than the preset first distance threshold. In this case, the mobile phone does not perform determining. In a time period t2, positions of the curve L11 located at the line segment T1 or a section of the curve L11 located above the line segment T1 represents that the distance between the display and the face of the user is less than or equal to the preset first distance threshold. In this case, the mobile phone determines that the display is occluded. In a time period t3, a section of the curve L11 located below the line segment T1 and above the line segment T2 indicates that the distance between the display and the face of the user is less than the preset second distance threshold. In this case, the mobile phone still maintains determining that the display is occluded. In a time period t4, a position of the curve L11 located at the line segment T2 or a section of the curve L11 located below the line segment T2 indicates that the distance between the display and the face of the user is greater than or equal to the preset second distance threshold. In this case, the mobile phone determines that the display is not occluded.

In the foregoing example, in embodiments of this application, two proximity optical signal thresholds are set. After the mobile phone determines that the display is occluded, whether the display is continuously occluded is determined using the smaller proximity optical signal threshold. The difference between the first proximity optical signal threshold and the second proximity optical signal threshold is used as a margin for determining whether the display remains occluded, to prevent a detected strength value of the proximity optical signal from floating at the first proximity optical signal threshold (that is, the strength value of the proximity optical signal changes between being greater than the first proximity optical signal threshold and being less than the first proximity optical threshold) when the distance between the mobile phone and the face of the user changes slightly, so that the mobile phone is kept from continuously determining that the display is occluded.

In another example, one proximity optical signal threshold may alternatively be set. If the strength value of the proximity optical signal is greater than or equal to the proximity optical signal threshold, the mobile phone determines that the distance between the display and the occluding object is less than or equal to the preset distance threshold, or if the strength value of the proximity optical signal is less than the proximity optical signal threshold, the mobile phone determines that the distance between the display and the occluding object is greater than the preset distance threshold.

The foregoing example describes in detail an implementation process of controlling, using the touch sensor, the proximity sensor, and the acceleration sensor, the display to turn off or on. The following describes an example of a procedure of a display control method according to an embodiment of this application.

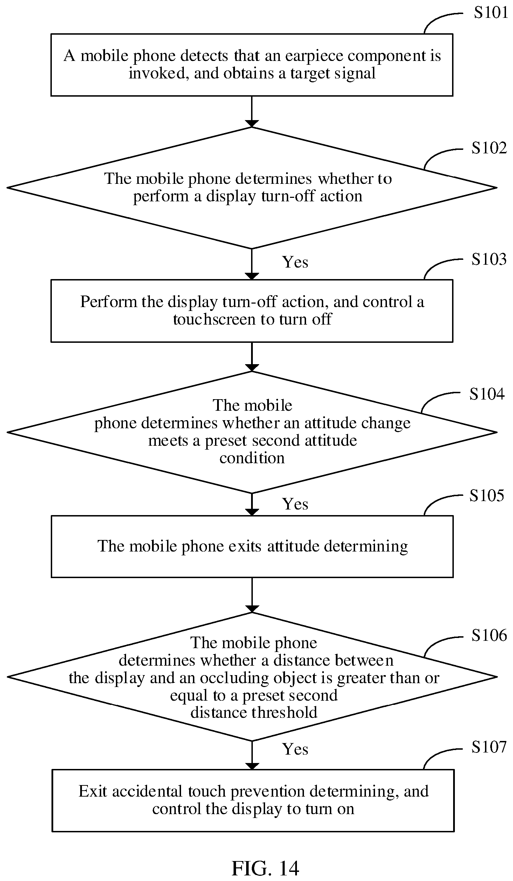

In some implementations, FIG. 14 is an exemplary diagram of a procedure of a display control method according to an embodiment of this application. As shown in FIG. 14, in a scenario in which a user needs to obtain a voice message scenario using an earpiece, the method provided in embodiments of this application is applied. The method may include the following steps.

S101: A mobile phone detects that an earpiece component is invoked, and obtains a target signal.

The earpiece component includes the receiver, earpiece, and the like mentioned in the foregoing embodiments.

For example, an application that invokes an earpiece component includes, but is not limited to, call, SMS, intelligent assistant, navigation, translation, music, short video, and video applications. These applications may play voice information using the earpiece. For example, the navigation application may play, using the earpiece, voice information of guiding the user to choose intersections, time taken to reach a destination, and a distance, a distance, and the like. For another example, the translation application may play, using the earpiece, voice information such as voice in a language that the user intends to translate. Examples in which all applications use the earpiece to play respective voice information are not described one by one. When needing to use the earpiece to play voice information, these applications need to request a permission of using the earpiece. When the earpiece component is used, a status flag of the earpiece component is changed to "Occupied". When use is completed, the permission of using the earpiece is removed, and the status flag of the earpiece component is changed to "Unoccupied". When the mobile phone detects that the status flag of the earpiece component is "Occupied", it indicates that the mobile phone detects that the earpiece component is invoked.

For example, the target signal includes, but is not limited to, an attitude signal detected by an acceleration sensor, a proximity signal detected by a proximity sensor, and a touch signal detected by a touch sensor.

S102: The mobile phone determines whether to perform a display turn-off action, and if the display turn-off action is to be performed, performs S103.

In an implementation, the mobile phone determines, based on the proximity signal, whether a distance between a display and an occluding object is less than or equal to a preset first distance threshold, determines, based on the attitude signal, whether an attitude of the mobile phone meets a preset first attitude condition, and controls the display to turn off when it is determined that the distance between the display and the occluding object is less than or equal to the preset first distance threshold and the preset first attitude condition is met.

In another implementation, the mobile phone determines, based on the touch signal, whether the touch operation performed on the display meets a preset touch condition, determines, based on the attitude signal, whether the mobile phone meets the preset first attitude condition, and controls, when it is determined that the preset touch condition is met and the preset first attitude condition is met, the display to turn off.

Determining in the foregoing two implementations may be separately performed, and the display turn-off action is triggered when the determining condition in either manner is met.

For example, when the mobile phone determines, based on the touch signal, whether the touch operation performed on the display meets the preset touch condition, and may determine, based on the touch signal in the foregoing example of this application, whether the touch operation performed on the display is facial contact, and determine, if the touch operation is facial contact, that the preset touch condition is met.

In another example, in the foregoing example of this application, whether the touch operation performed on the display is hair contact may alternatively be determined based on the touch signal, and if the touch operation is hair contact, it is determined that the preset touch condition is met.

It may be known that for one group of touch signals, it may be determined that the touch operation performed on the display is both facial contact and hair contact. Therefore, it may also be determined that the preset touch condition is met when it is determined, based on the touch signal, that the touch operation performed on the display is facial contact and hair contact.

S103: Perform the display turn-off action, and control the display to turn off.

In some possible embodiments, when the display of the mobile phone is turned off, the mobile phone does not process a touch signal or a proximity signal. When the display is turned off, the touch sensor does not respond to a touch operation of the user. For example, when the user touches the display using a finger or the face, the display is not turned on. The proximity sensor does not respond to a change in the distance between the display and the occluding object. For example, the user moves the head away, so that the display is not occluded in the front, and the display is not turned on. Specifically, if the proximity sensor is an optical proximity sensor, when the display is turned off, an infrared light source stops emitting infrared light, so as not to respond to a change in the distance between the display and the occluding object. If the proximity sensor is an ultrasonic proximity sensor, when the display is turned off, the earpiece stops emitting ultrasonic wave so as not to respond to a change in the distance between the display and the occluding object.

S104: The mobile phone determines whether an attitude change meets a preset second attitude condition, and if the attitude change meets the preset second attitude condition, performs S105, or if the attitude change does not meet the preset second attitude condition, keeps the display off.

For example, after the display is turned off, the mobile phone continuously obtains an attitude signal to determine whether the user has changed the attitude of the mobile phone. For example, the user performs an action such as moving the mobile phone away from an ear and keeps the mobile phone in front of the chest to continue to view information, holding the mobile phone in a hand, or placing the mobile phone on a desktop, and as a result the attitude of the mobile phone has changed. The mobile phone determines, based on the attitude signal, whether the attitude change of the mobile phone meets the preset second attitude condition. When the preset second attitude condition is met, it indicates that the user performs an action of moving the mobile phone away from the ear.

S105: The mobile phone exits attitude determining.

The mobile phone no longer determines the attitude change of the mobile phone based on the attitude signal. The determining is resumed when the mobile phone performs the foregoing step S103 next time.

In some implementations, that the mobile phone exits attitude determining indicates that the user has already moved the mobile phone away from the face. Next time when the mobile phone performs S103, it indicates that the display of the mobile phone is turned off because the mobile phone recognizes an action of placing the mobile phone near the face by the user. Therefore, the mobile phone resumes determining of the attitude change of the mobile phone based on the attitude signal.

S106: The mobile phone determines whether a distance between the display and an occluding object is greater than or equal to a preset second distance threshold, and if the distance between the display and the occluding object is greater than or equal to the preset second distance threshold, performs S107, or the distance between the display and the occluding object is less than the preset second distance threshold, keeps the display off.

For example, when the display is turned off, the mobile phone controls the proximity sensor to stop detecting a proximity signal. After exiting gesture determining, the mobile phone continues to obtain a proximity signal detected by the proximity sensor. If the user moves the mobile phone away from the face, the distance between the display and the occluding object changes. If the proximity signal is a proximity optical signal, when a strength value of the proximity optical signal is less than or equal to a second proximity optical signal threshold, the mobile phone determines that the distance between the display and the occluding object is greater than or equal to the preset second distance threshold.

S107: Exit accidental touch prevention determining, and control the display to turn on.

For example, the exiting accidental touch prevention determining includes: the mobile phone no longer determines, based on the attitude signal, the touch signal, and the proximity signal, whether to perform the display turn-off action.

In some implementations, after the accidental touch prevention determining is exited, a status of the earpiece is detected. If the earpiece is still in an invoked state, that is, the user does not hang up the call in a call scenario, in this case, step S101 is performed again. If the earpiece is in an uninvoked state, that is, the user hangs up the call in the call scenario, in this case, the earpiece waits to be invoked next time, and when step S101 is performed, determining is resumed.

For example, after exiting the accidental touch prevention determining, the mobile phone may directly control the display to turn on, or wait for an operation of the user to control the display to turn on. The operation of the user includes: tapping the display by the user. If a "Gaze to wake" function is set, the operation of the user also includes gazing at the display.

In addition, in some possible embodiments, after the mobile phone controls the display to turn off in step S103, the mobile phone may process the touch signal, the proximity signal, and the attitude signal at the same time. When any one or more of the signals meet the foregoing corresponding determining conditions, the mobile phone controls the display to turn on. That is, after the mobile phone controls the display to turn off in step S103, instead of waiting for the attitude signal to meet the preset second attitude condition first before determining the touch signal and the proximity signal, the mobile phone may determine the three signals at the same time, and when any one or more of the signals meet the foregoing corresponding conditions, the mobile phone controls the display to turn on.

In addition, in some implementations, if determining, based on the touch signal, that the touch operation performed on the mobile phone meets the preset touch condition, the mobile phone triggers the display to turn off after a delay. In this case, the display is turned off after first preset duration. In a process of turning off the display after a delay, if determining, based on the attitude signal, that the attitude change of the mobile phone meets the preset first attitude condition, the mobile phone immediately controls the display to turn off.

For example, delayed display turn-off may be determined when the mobile phone performs step S102. If the mobile phone determines, based on the touch signal, that the touch operation performed on the display meets the preset touch condition, and the touch operation that meets the preset touch condition lasts for particular duration, the mobile phone controls the display to turn off. That is, if the touch operation is a touch operation in which the face of the user comes into contact with the display, the display is controlled to turn off after the face of the user comes into contact with the display for the first preset duration (for example, 2 seconds).

In addition, the delayed display turn-off may alternatively be determined after the mobile phone completes step S107. If the mobile phone determines, based on the touch signal, that the touch operation performed on the display meets the preset touch condition and lasts for the first preset duration, the display is turned off.

In some implementations, after performing step S103 of controlling the display to turn off, the mobile phone may further directly determine, based on the touch signal, whether to perform a display turn-on operation. For example, when controlling the display to turn off, the mobile phone continuously determines, based on the touch signal, whether a trigger operation performed on the display meets the preset touch condition, and when determining that the touch operation does not meet the preset touch condition and lasts second preset duration, the mobile phone controls the display to turn on. The second preset duration may be equal to the first preset duration. In addition, when it is determined that the preset touch condition is not met, the display may be immediately controlled to turn on, which is specifically set according to an actual application.

In some actual manners, after performing step S103 of controlling the display to turn off, the mobile phone may further directly determine, based on the proximity signal, whether to perform a display turn-on operation, which is similar to the foregoing example of determining, based on the touch signal, whether to perform a display turn-on operation, and details are not described herein again.

In addition, in some implementations, priorities may further be set for different scenarios. More determining manners may be applied to a scenario with a higher priority. For example, a call scenario is set to a scenario with a high priority. When the user answers a call, the mobile phone may determine, based on a proximity optical signal, an ultrasonic signal, a touch signal, and an attitude signal, whether to control the display to turn off. A translation scenario is set to a scenario with a low priority. When the user uses the earpiece of the mobile phone to obtain translated content, whether to control the display to turn off may be determined using a touch signal or using a proximity optical signal only.

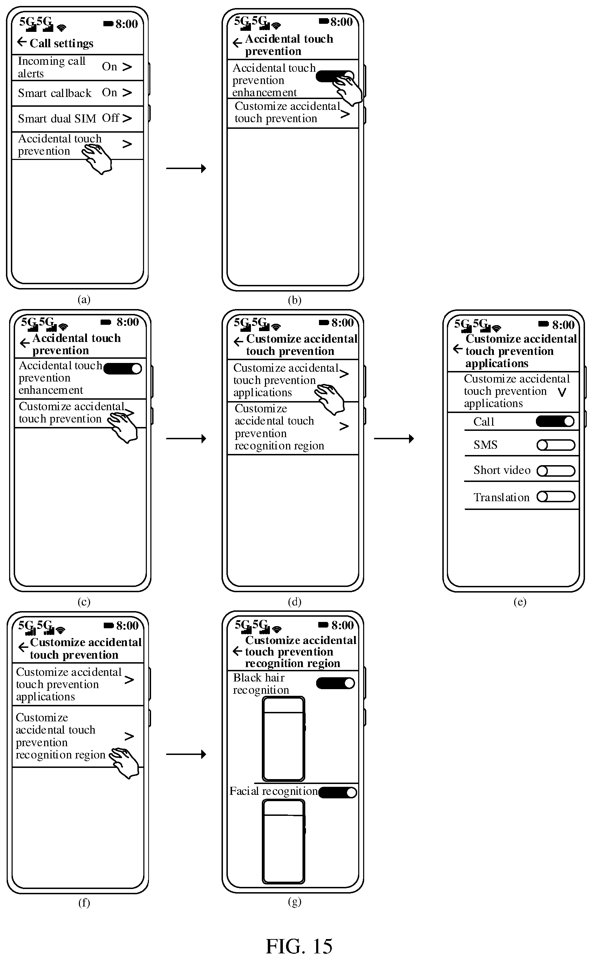

In addition, in some implementations, the display control method provided in embodiments of this application may be directly updated to a system of the mobile phone through system upgrade, and an "Accidental touch prevention enhancement" option may be added to the mobile phone. As shown in an example diagram of a call settings page in FIG. 15, (a) of FIG. 15 shows a page of the call settings page. After the user taps a "Call accidental touch prevention" option, an accidental touch prevention option page is displayed. As shown in (b) of FIG. 15, the user may enable or disable, by tapping the "Accidental touch prevention enhancement" option, an accidental touch prevention function that can be implemented by the display control method provided in the foregoing embodiments of this application. When the accidental touch prevention enhancement option is enabled, all applications that can invoke the earpiece and the display and that are on the mobile phone may use the display control method provided in embodiments of this application.

In addition, for the accidental touch prevention option page shown in (c) of FIG. 15, the user taps a "Customize accidental touch prevention" option, and the accidental touch prevention customization page is displayed. As shown in (d) of FIG. 15, the user may open a pop-up window by tapping the "Customize accidental touch prevention applications" option. As shown in (e) of FIG. 15, in the pop-up window, the user may enable in a customized manner a function use permission of an application that requires accidental touch prevention, or disable a function use permission of an application with accidental touch prevention already enabled.

In addition, as shown in (f) of FIG. 15, in the accidental touch prevention customization page, the user taps a "Customize accidental touch prevention recognition region" to set an accidental touch prevention recognition region. As shown in (g) of FIG. 15, the user may select a size, a position, a shape, and the like of a hair recognition region and a facial recognition (large object recognition) region in a window.

Embodiments of this application provide a display control method. A mobile phone detects a touch operation performed on the mobile phone using a touch sensor, detects an attitude of the mobile phone using an acceleration sensor, and determines that a display is occluded when it is determined that the touch operation is a touch operation generated by contact with a part such as the face, ear, or hair of a user. When it is determined that the attitude of the mobile phone is an attitude when the user picks up and places the mobile phone near an ear, it is determined that the user performs an action of picking up and placing the mobile phone near the ear. When the mobile phone determines that the display is occluded and the user performs the action of picking up and placing the mobile phone near the ear, the display is controlled turn off, thereby avoiding an optical proximity light black hair issue that occurs when an optical proximity sensor is used. Further, because the two used determining processes are independent of each other and are not associated with each other, and the mobile phone performs an action of turning off the display when results of the two determining processes are both yes, so that stability of display turn-off determining can be improved, thereby reducing a probability of accidental touches.

The display control method provided in embodiments of this application may be applied to a terminal device. The terminal device may be a terminal device having a display, for example, a mobile phone, a tablet computer, a wearable device (for example, a smartwatch or a smart band), an in-vehicle device, a virtual reality device, or an electric vehicle control panel. A specific form of the terminal device is not specifically limited in embodiments of this application.

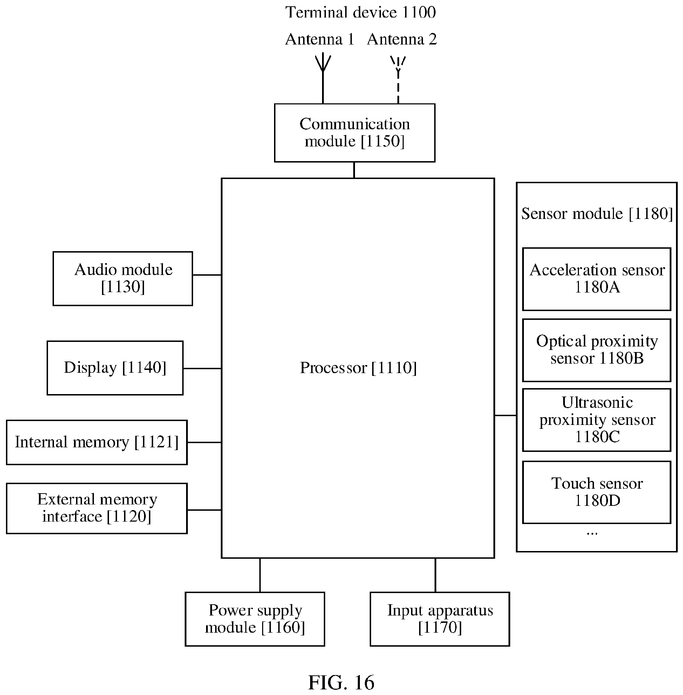

For example, FIG. 16 is a schematic structural diagram of a terminal device 1100. The terminal device 1100 may include a processor 1110, an external memory interface 1120, an internal memory 1121, an audio module 1130, a display 1140, a communication module 1150, a power supply module 1160, an input apparatus 1170, a sensor module 1180, and the like. The sensor module 1180 may include an acceleration sensor 1180A, an optical proximity sensor 1180B, an ultrasonic proximity sensor 1180C, a touch sensor 1180D, and the like.

It may be understood that the structure illustrated in embodiments of this application does not impose a specific limitation on the terminal device 1100. In some other embodiments of this application, the terminal device 1100 may include more or fewer components than those shown in the figure, or some components can be combined, or some components can be split, or a different component arrangement can be used. The components shown in the figure may be implemented by hardware, software, or a combination of software and hardware.

The processor 1110 may include one or more processing units. For example, the processor 1110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), etc. Different processing units may be separate devices, or may be integrated into one or more processors.

The controller may be a nerve center and a command center of the terminal device 1100. The controller may generate an operation control signal based on an instruction operation code and a timing signal, to complete control of instruction fetching and instruction execution.

A memory may be disposed in the processor 1110, and is configured to store instructions and data. In some embodiments, the memory in the processor 1110 is a cache memory. The memory may store instructions or data just used or cyclically used by the processor 1110. If needing to use the instructions or the data again, the processor 1110 may directly invoke the instructions or the data from the memory. This avoids repeated access and reduces the waiting time of the processor 1110, thereby improving system efficiency.

In some embodiments, the processor 1110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in this embodiment of this application is merely an example for description, and does not constitute a limitation on the structure of the terminal device 1100. In some other embodiments of this application, the terminal device 1100 may alternatively use an interface connection manner different from that in the foregoing embodiment, or use a combination of a plurality of interface connection manners.

The terminal device 1100 may implement an audio function such as music playing and sound recording by using an audio module 1130, an earpiece 1131, a microphone 1132, an application processor, and the like. The audio module 1130 is configured to convert digital audio information into an analog audio signal for output, and is also configured to convert analog audio input into a digital audio signal. The audio module 1130 may be configured to code and decode an audio signal. In some embodiments, the audio module 1130 may be disposed in the processor 1110, or some functional modules in the audio module 1130 are disposed in the processor 1110.

The earpiece 1131 is configured to convert an audio electrical signal into a sound signal. In embodiments of this application, the earpiece is configured to play voice information provided by applications such as call, SMS, short video, navigation, and translation applications. In addition, the earphone is further configured to emit an ultrasonic signal.

The microphone is configured to convert a sound signal into an electrical signal. A user may make a voice near the microphone with the mouth, to input a sound signal to the microphone. In embodiments of this application, the microphone is configured to receive the voice sent by the user, and is further configured to receive the ultrasonic signal.

The communication module 1150 may provide a wireless communication solution that is applied to the terminal device 1100 and that includes Wi-Fi, Bluetooth (blue tooth, BT), wireless data transmission module (for example, 433 MHz, 868 MHz, and 915 MHz), and the like. The communication module 1150 may be one or more devices integrating at least one communication processing module. The communication module 1150 receives an electromagnetic wave through an antenna 1 or an antenna 2, performs filtering and frequency modulation on an electromagnetic wave signal, and sends a processed signal to the processor 1110. The communication module 1150 may further receive a to-be-sent signal from the processor 1110, perform frequency modulation and amplification on the signal, and convert the signal into an electromagnetic wave for radiation through the antenna 1 or the antenna 2.

The terminal device 1100 implements a display function through a GPU, the display 1140, the application processor, and the like. The GPU is a microprocessor for image processing, and is connected to the display 1140 and the application processor. The GPU is configured to: perform mathematical and geometric computation, and render an image. The processor 1110 may include one or more GPUs that execute program instructions to generate or change display information.

The display 1140 is configured to display an image, a video, and the like. The display 1140 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, a quantum dot light-emitting diode (quantum dot light emitting diodes, QLED), or the like. In some embodiments, the terminal device 200 may include 1 or N displays 1140. N is a positive integer greater than 1. In embodiments of this application, the display 1140 may be configured to display a UI and receive an operation on the UI by the user.

In some embodiments, a pressure sensor, a touch sensor, and the like are disposed on the display 1140. The pressure sensor is configured to sense a pressure signal, and can convert the pressure signal into an electrical signal. When a touch operation is performed on the display 1140, the terminal device 1100 detects intensity of the touch operation through the pressure sensor. The terminal device 1100 may also calculate a touch location based on a detection signal of the pressure sensor.

The touch sensor 1180D, also referred to as a "touch panel", may constitute a touchscreen with the display 1140. The touch sensor 1180D is configured to detect a touch operation performed on or near the touch sensor. The touch sensor 1180D may transfer the detected touch operation to the application processor, to determine a type of a touch event. The touch sensor 1180D may further provide a visual output related to the touch operation through the display 1140.

The power supply module 1160 may be configured to supply power to components included in the terminal device 1100. In some embodiments, the power supply module 1160 may be a battery, for example, a rechargeable battery.

The input apparatus 1170 may include a keyboard, a mouse, or the like. The keyboard is configured to input English letters, digits, punctuation marks, and the like into the terminal device 1100, to send commands, input data, and the like to the terminal device 1100. The mouse is an indicator for system horizontal and vertical coordinate positioning of the terminal device 1100, and is configured to input an instruction and the like to the terminal device 1100. The input apparatus 1170 may be connected to the terminal device 1100 in a wired connection manner. For example, the input apparatus 1170 is connected to the terminal device 1100 through a GPIO interface, a USB interface, or the like. The input apparatus 1170 may alternatively be connected to the terminal device 1100 in a wireless manner. For example, the input apparatus 1120 is connected to the terminal device 1100 in a manner such as Bluetooth or infrared.

The sensor module 1180 may include an acceleration sensor 1180A, an optical proximity sensor 1180B, an ultrasonic proximity sensor 1180C, a touch sensor 1180D, an ultrasonic proximity sensor, and the like.

The acceleration sensor 1180A may detect the magnitudes of accelerations of the terminal device 1100 in various directions (usually on three axes), The magnitude and direction of gravity may be detected when the terminal device 1100 is static. The acceleration sensor 1180A may be further configured to identify a posture of the terminal device, and is used in an application such as switching between landscape mode and portrait mode or a pedometer.

In embodiments of this application, the acceleration sensor 1180A is configured to detect angle change information, and transfer the angle change information to the application processor. The angle change information is used for describing an attitude change of the terminal device 1100, and determining whether a user needs to touch the display 1194.

The optical proximity sensor 1180B may include, for example, a light-emitting diode (LED) and a light detector. The light-emitting diode may be an infrared light-emitting diode, and the light detector may be a photodiode. The terminal device 1100 emits infrared light through the light-emitting diode. The terminal device 1100 uses the photodiode to detect reflected infrared light from an object nearby. When sufficient reflected light is detected, it may be determined that there is an object near the terminal device 1100. When insufficient reflected light is detected, the terminal device 1100 may determine that there is no object near the terminal device 1100. The terminal device 1100 may detect, through the optical proximity sensor 1180B, that a user holds the terminal device 1100 close to an ear for a call, to automatically turn off a display for power saving. The optical proximity sensor 1180B may also be used in a leather case mode or a pocket mode to automatically unlock or lock the screen.

The ultrasonic proximity sensor 1180C may include an ultrasonic wave generator and an ultrasonic wave receiver. The ultrasonic wave generator may be a receiver 1170B, and the ultrasonic wave receiver may be a microphone 1170C. The terminal device 1100 emits an ultrasonic wave by using the receiver 1170B, and the microphone 1170C receives an ultrasonic wave reflected by an object nearby. Whether there is an object nearby the terminal device 1100 and a distance between the object and the terminal device 1100 may be determined based on a strength value of the reflected ultrasonic signal. The terminal device 1100 may detect, through the ultrasonic proximity sensor 1180C, that a user holds the terminal device 1100 close to an ear for a call, to automatically turn off a display for power saving.

In embodiments of this application, the optical proximity sensor 1180B and the ultrasonic proximity sensor 1180C are both configured to detect distance information between the display of the mobile phone and an occluding object covering the display.

A software system of the terminal device 1100 may use a layered architecture, an event-driven architecture, a microkernel architecture, a microservice architecture, or a cloud architecture. In this embodiment of this application, an Android system with a layered architecture is used as an example to describe a software structure of the terminal device 1100.

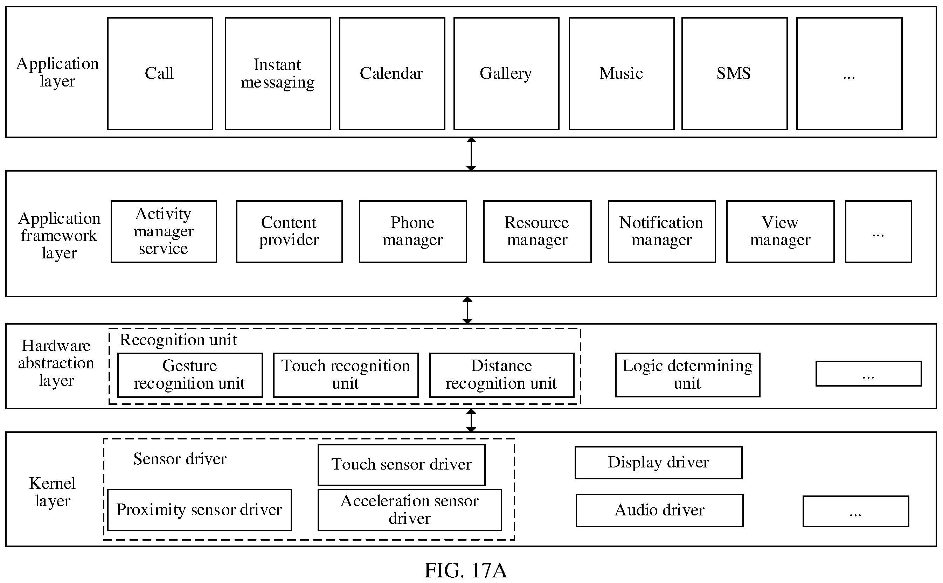

FIG. 17A is a structural block diagram of a terminal device 1100 according to an embodiment of this application.

In the layered architecture, software is divided into several layers, and each layer has a clear role and task. The layers communicate with each other through a software interface. In some embodiments, a software system is divided into four layers, which are respectively, from top to bottom, an application layer (application, APP), an application framework layer (framework, FWK), a hardware abstraction layer (hardware abstraction layer, HAL), and a kernel layer (kernel layer).

The application layer may include a series of application packages.

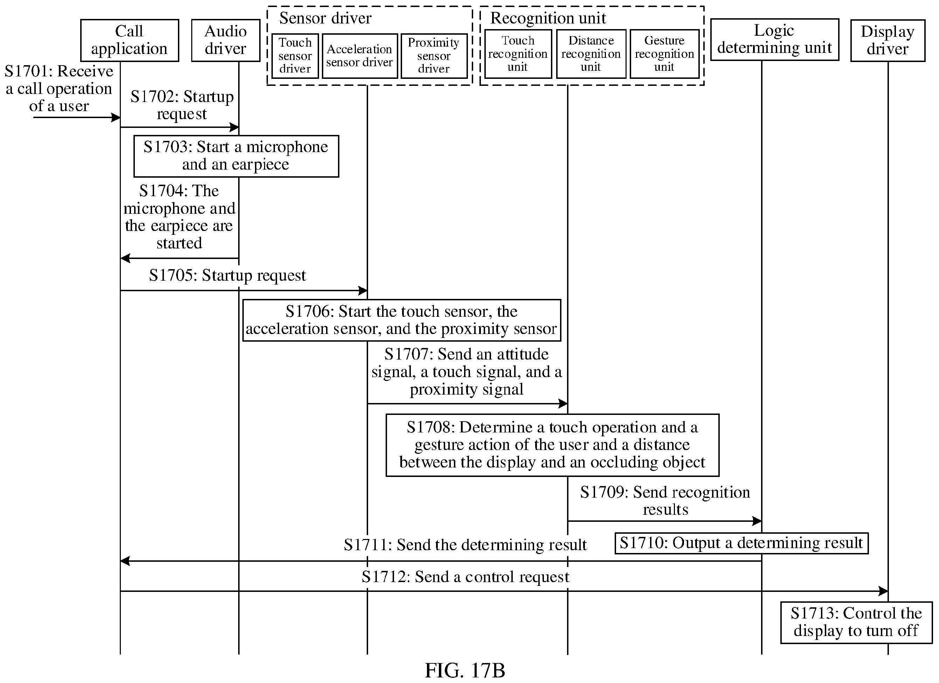

As shown in FIG. 17B, the application package may include applications such as call and instant messaging applications. The call application is configured to perform dialing, calling, and the like. The instant messaging application is configured to perform video communication, voice communication, and the like. In some implementations, the application packages may further include applications such as calendar, gallery, music, and SMS applications.

The application framework layer provides an application programming interface (application programming interface, API) and a programming framework for the applications at the application layer. The application framework layer includes some predefined functions.

As shown in FIG. 17A, the application framework layer may include an activity manager service (activity manager service, AMS), a content provider, a phone manager, a resource manager, a notification manager, and a view system.

The AMS centrally schedules an Activity interface of the application.

The window manager is configured to manage a window program. The window manager may obtain a size of a display, determine whether there is a status bar, lock a display, take a screenshot, and the like.

The content provider is configured to store and obtain data, and enable these data to be accessible to an application. The data may include a video, an image, audio, calls that are made and received, a browsing history and a browsing bookmark, an address book, and the like.

The view system includes visual controls, such as a control for displaying text, a control for displaying pictures, and the like. The view system may be configured to build an application. A display interface may be formed by one or more views. For example, a display interface including an SMS message notification icon may include a view for displaying a text and a view for displaying a picture.

The phone manager is configured to provide a communication function for the terminal device. for example, call status management (including connecting, hanging-up, and the like).

The resource manager provides various resources for an application such as a localized character string, an icon, a picture, a layout file, and a video file.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively provide, on a status bar at the top of the system, a notification in a form of a chart or scroll bar text, for example, a notification of an application running in the background, or provide, on a display, a notification in a form of a dialog window. For example, text information is prompted in the status bar, an alert sound is made, the terminal device vibrates, or an indicator light blinks.

The hardware abstraction layer is an interface layer located between an operating system and a hardware circuit, and aims to abstract hardware. As shown in FIG. 17A, the hardware abstraction layer may include: a recognition unit and a logic determining unit. The recognition unit includes a gesture recognition unit, a touch recognition unit, a distance recognition unit, and the like.

The kernel layer is a layer between hardware and software. The kernel layer includes at least a sensor driver, a display driver, and an audio driver. The sensor device driver includes: a touch sensor driver, an acceleration sensor driver, a proximity sensor driver, and the like.

The following describes a display control method provided in embodiments of this application by way of example with reference to the software architecture of the terminal device 1100.

As shown in FIG. 17B, the display control method provided in embodiments of this application includes the following steps.

S1701: The call application receives a call operation of a user.

For example, the call operation of the user includes making a call by the user and answering a call by the user.

S1702: The call application sends a startup request to the audio driver.

The call application sends the startup request to the audio driver, so that the audio driver starts the microphone and the earpiece to input voice information and receive voice information.

S1703: The audio driver starts the microphone and the earpiece.

The audio driver controls the microphone and the earpiece to start, the earpiece plays the voice information of the peer party, and the microphone receives the voice information of the user.

S1704: The audio driver sends, to the call application, a notification that the microphone and the earpiece are already started.

The audio driver notifies the call application that the microphone and the earpiece are started.

S1705: The call application sends a startup request to the sensor driver.

The call application sends the startup request to the sensor driver to start the sensors to acquire signals.

S1706: The sensor driver starts the touch sensor, the acceleration sensor, and the proximity sensor.

The touch sensor acquires a touch signal performed on the display, the acceleration sensor acquires an attitude signal of an attitude change of the mobile phone, and the proximity sensor acquires a proximity signal of a distance between the display and the occluding object.

S1707: The touch sensor sends the acquired touch signal to the touch recognition unit, the acceleration sensor sends the acquired attitude signal to the gesture recognition unit, and the proximity sensor sends the acquired proximity signal to the distance recognition unit.

S1708: The touch recognition unit recognizes a touch operation of the user based on the touch signal, the gesture recognition unit recognizes a gesture operation of the user based on the attitude signal, and the distance recognition unit recognizes the distance between the display and the occluding object based on the proximity signal.

S1709: The touch recognition unit sends a recognition result of the touch operation of the user to the logic determining unit, the gesture recognition unit sends a recognition result of the gesture operation of the user to the logic determining unit, and the distance recognition unit sends a recognition result of the distance between the display and the occluding object to the logic determining unit.

S1710: The logic determining unit outputs a determining result based on the touch operation of the user, the gesture operation of the user, and the distance between the display and the occluding object.

For example, the logic determining unit may use an example of determining whether to control the display to turn off in the foregoing example of this application, for example:
determining, based on the proximity signal, whether a distance between a display and an occluding object is less than or equal to a preset first distance threshold, determining, based on the attitude signal, whether an attitude of the mobile phone meets a preset first attitude condition, and controlling the display to turn off when it is determined that the distance between the display and the occluding object is less than or equal to the preset first distance threshold and the preset first attitude condition is met; and
determining, based on the touch signal, whether the touch operation performed on the display meets a preset touch condition, determining, based on the attitude signal, whether the mobile phone meets the preset first attitude condition, and controlling, when it is determined that the preset touch condition is met and the preset first attitude condition is met, the display to turn off.

Determining in the foregoing two implementations may be separately performed, and a determining result of turning off the display is output when the determining condition in either implementation is met.

S1711: The logic determining unit sends a determining result to the call application.

For example, the determining result includes: it is recognized that the user performs a gesture action of placing the mobile phone near an ear, and the display of the mobile phone is occluded.

S1712: The call application sends a control request to the display driver based on the determining result.

For example, the control request includes: requesting the display to turn off.

S1713: The display driver controls, based on the control request, the display to turn off.

Embodiments of this application provide a terminal device. The terminal device may include a memory and one or more processors. The memory is configured to store computer program code. The computer program code includes computer instructions. When the processor executes the computer instructions, the terminal device may perform various functions or steps performed by a mobile phone in the foregoing method embodiments. For the structure of the terminal device, refer to the structure of the terminal device shown in FIG. 16.

Embodiments of this application further provide a computer-readable storage medium, including computer instructions. When the computer instructions run on a terminal device, the terminal device is enabled to perform the foregoing display control method.

Embodiments of this application further provide a computer program product. When the computer program product runs on a terminal device, the terminal device is enabled to perform the foregoing display control method.

According to the descriptions of the foregoing implementations, a person skilled in the art may clearly understand that, for the purpose of convenient and brief description, the division into the foregoing functional modules is only used as an example for description. In actual application, the foregoing functions may be allocated to and completed by different functional modules based on needs. That is, an inner structure of an apparatus is divided into different functional modules to complete all or some of the functions described above.

In the several embodiments provided in this application, it should be understood that the disclosed apparatus and method may be implemented in another manner. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts shown as units may be one or more physical units, that is, may be located in one place, or may be distributed in a plurality of different places. Some or all of the units may be selected according to actual requirements to achieve the objectives of the solutions of the embodiments.

In addition, functional units in embodiments of this application may be integrated into some processing units, or each of the units may be physically separated, or two or more units may be integrated into some units. The integrated unit may be implemented in a form of hardware, or may be implemented in a form of a software functional unit.

When the integrated unit is implemented in a form of a software function unit and sold or used as an independent product, the integrated unit may be stored in some readable storage media. Based on such an understanding, the technical solutions in embodiments of this application essentially, or the part contributing to the conventional technology, or all or some of the technical solutions may be implemented in the form of a software product. The software product is stored in some storage media and includes several instructions for instructing a device (which may be a single-chip microcomputer, a chip, or the like) or a processor (processor) to perform all or some of the steps of the methods described in embodiments of this application. The storage medium includes: a USB flash disk, a removable hard disk, a read only memory (ROM), a random access memory (RAM), a magnetic disk, an optical disk, and other media capable of storing program codes.

What is described above is merely specific implementations of this application, but the protection scope of this application is not limited to such implementations. Any variation or replacement within the technical scope disclosed in this application still fall within the protection scope of this application. Therefore, the scope of protection of this application shall be subject to the scope of protection of the claims.

## Claims

1. A display control method, applied to a terminal device, wherein the terminal device comprises an acceleration sensor and a touch sensor disposed on a display, and the method comprises:
obtaining, based on a touch signal acquired by the touch sensor, a touch operation performed by a user on the display;
obtaining an attitude change of the terminal device based on an attitude signal acquired by the acceleration sensor; and
controlling, when the display is on, the display to turn off if the touch operation performed on the display meets a preset first condition and the attitude change of the terminal device meets a preset second condition.

2. The method according to claim 1, wherein the touch operation is performed in a preset first region on the display, and that the touch operation performed on the display meets a preset first condition comprises:
a touch signal value is greater than or equal to a preset first threshold, and an area of a touch region is greater than or equal to a preset second threshold, wherein the touch signal value is a signal value of the touch operation performed on the display, and the touch region is a region in which the touch operation is performed.

3. The method according to claim 1, wherein the touch operation is performed in a preset first region on the display, and that the touch operation performed on the display meets a preset first condition comprises:
a touch signal value is greater than or equal to a preset first threshold, and a major axis length of the touch region is greater than or equal to a preset third threshold.

4. The method according to claim 2 or 3, wherein the touch signal value is a maximum value of touch point signal values in the touch region or an average value of the touch point signal values in the touch region.

5. The method according to any one of claims 2 to 4, wherein the touch operation is performed in a preset second region on the display, the second region does not overlap the first region, and that the touch operation performed on the display meets a preset first condition comprises:
a quantity of touch points on which the touch operation is performed on the display is greater than or equal to a preset fourth threshold.

6. The method according to claim 5, wherein the second region comprises a first sub-region and a second sub-region, and the first sub-region and the second sub-region are respectively located on two sides of an earpiece.

7. The method according to any one of claims 1 to 6, wherein the attitude comprises a roll angle and a pitch angle, and that the attitude change of the terminal device meets a preset second condition comprises:
a roll angle change value of the terminal device is greater than or equal to a first roll angle determining threshold, and a pitch angle change value of the terminal device is greater than or equal to a first pitch angle determining threshold.

8. The method according to claim 7, wherein after the controlling the display to turn off, the method further comprises:
controlling the display to turn on if it is determined that a distance between an object generating the touch operation and the display is greater than or equal to a preset second distance threshold and that the attitude change of the terminal device meets a preset third condition.

9. The method according to claim 8, wherein the attitude comprises a yaw angle, the roll angle, and the pitch angle, and that the attitude change of the terminal device meets a preset third condition comprises:
a yaw angle change value of the terminal device is greater than or equal to a second roll angle determining threshold, and/or the pitch angle change value is greater than or equal to a second pitch angle determining threshold, and/or the roll angle change value is greater than or equal to a second roll angle determining threshold.

10. The method according to claim 8 or 9, wherein after the controlling the display to turn on, the method further comprises:
controlling the display to turn off when the touch operation performed on the display meets the preset first condition for first preset duration.

11. The method according to any one of claims 1 to 10, wherein before the controlling the display to turn off if the touch operation performed on the display meets a preset first condition and the attitude change of the terminal device meets a preset second condition, the method further comprises:
detecting that the earpiece is invoked.

12. The method according to claim 1, wherein the terminal device further comprises a proximity sensor, and the method further comprises:
obtaining a distance between the display and an occluding object based on a proximity signal acquired by the proximity sensor; and
controlling, when the display is on, the display to turn off if the distance between the display and the occluding object is less than or equal to a preset first distance threshold and the attitude change of the terminal device meets the preset second condition.

13. A terminal device, wherein the terminal device comprises a processor and a memory, the processor is coupled to the memory, the memory is configured to store computer program code, the computer program code comprises computer instructions, and when the processor executes the computer instructions, the terminal device is enabled to perform the method according to any one of claims 1 to 12.

14. A computer-readable storage medium, wherein the computer-readable storage medium comprises computer instructions, and when the computer instructions run on a terminal device, the terminal device is enabled to perform the method according to any one of claims 1 to 12.

15. A computer program product, wherein when the computer program product is executed on a terminal device, the terminal device is enabled to perform the method according to any one of claims 1 to 12.
